(19) Europäisches Patentamt
European Patent Office
Office européen des brevets

(11) **EP 0 927 970 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(51) Int Cl.:
**G07B 17/00** (2006.01)

(21) Anmeldenummer: **98250408.6**

(22) Anmeldetag: **23.11.1998**

(54) **Frankiermaschine mit einer Chipkarten-Schreib/Leseeinheit**

Franking machine with chipcard read/write unit

Machine à affranchir avec dispositif de lecture/écriture de cartes à puce

(84) Benannte Vertragsstaaten:
**CH DE FR GB IT LI**

(30) Priorität: **15.12.1997 DE 19757651**

(43) Veröffentlichungstag der Anmeldung:
**07.07.1999 Patentblatt 1999/27**

(73) Patentinhaber: **Francotyp-Postalia GmbH**
**16547 Birkenwerder (DE)**

(72) Erfinder: **Günther, Stephan**
**13465 Berlin (DE)**

(56) Entgegenhaltungen:
**EP-A- 0 762 338**       **EP-A- 0 789 333**
**US-A- 4 802 218**       **US-A- 5 490 077**

**Beschreibung**

Die Erfindung betrifft eine Frankiermaschine mit einer Chipkarten-Schreib/Leseeinheit, gemäß der im Oberbegriff des Anspruchs 1 angegebenen Art, welche mit einer zugehörigen Steuerung ausgestattet ist, die in Verbindung mit limitiert gültigen Chipkarten, die Funktionseingabe und die Verwaltung von zu buchenden Kostenstellendaten vereinfacht. Unter Verwendung einer Masterkarte wurde zu diesem Zweck die Chipkarte davor Frankiermaschinen-intern initialisiert, wobei eine Nummer in den Chipkartenspeicher eingeschrieben wird.

Die Verwaltung von abrechnungsspezifischen Daten über Kostenstellen ist bei Frankiermaschinen schon des längeren bekannt. Zweck der Kostenstellen ist es, Transparenz in die Abrechnung von Geräten zu bringen, die von unterschiedlichen Benutzern gebraucht werden. Unter dem Begriff Kostenstelle ist ein für die abteilungsweise Abrechnung bzw. Buchung von Benutzungshandlungen vorgesehener nichtflüchtiger Speicherbereich in der Frankiermaschine zu verstehen. Jeder Kostenstelle ist eine Nummer und/oder Bezeichnung zugeordnet, über welche der vorgenannte Speicherbereich angewählt wird.

Moderne Frankiermaschinen, wie beispielsweise die aus US 4.746.234 bekannte Thermotransfer-Frankiermaschine, setzen vollelektronische digitale Druckvorrichtungen ein. Damit ist es prinzipiell möglich, beliebige Texte und Sonderzeichen im Frankierstempeldruckbereich und ein beliebiges oder ein einer Kostenstelle zugeordnetes Werbeklischee zu drucken. Beispielsweise die Frankiermaschine T1000 der Anmelderin hat einen Mikroprozessor, welcher von einem gesicherten Gehäuse umgeben ist, welches eine Öffnung für die Zuführung eines Briefes aufweist. Bei einer Briefzuführung übermittelt ein mechanischer Briefsensor (Mikroschalter) ein Druckanforderungssignal an den Mikroprozessor. Der Frankierabdruck beinhaltet eine zuvor eingegebene und gespeicherte postalische Information zur Beförderung des Briefes.

Es ist weiterhin bekannt, auch kostenstellenspezifische Daten auf Chipkarten zu hinterlegen, um so die benutzerspezifischen Informationen mobil vorzuhalten und einen bewußten Mißbrauch anderer Kostenstellen zu vermeiden. In US 5,490,077 wurde bereits für die oben genannte Thermotransfer-Frankiermaschine eine Dateneingabemöglichkeit mittels Chipkarten vorgeschlagen. Eine der Chipkarten lädt neue Daten in die Frankiermaschine und ein Satz an weiteren Chipkarten gestattet durch das Stecken einer Chipkarte eine Einstellung entsprechend eingespeicherter Daten vorzunehmen. Das Datenladen und die Einstellung der Frankiermaschine sollen damit bequemer und schneller als per Tastatureingabe möglich sein. Die Tastatur der Frankiermaschine bleibt klein und übersichtlich, weil keine zusätzlichen Tasten erforderlich sind, um zusätzliche Funktionen zu laden oder einzustellen. Auf der Rückseite der Frankiermaschine befindet sich ein Einsteckschlitz einer Chipkarten-Schreib/Leseeinheit, in welchen die jeweilige Chipkarte vom Kunden innerhalb eines Zeitfensters eingesteckt werden soll. Wegen des mangelnden unmittelbaren Sichtkontaktes gelingt es einem ungeübten Benutzer nicht immer sofort hintereinander die erforderlichen Chipkarten einzustecken, was dann zu unerwünschten Verzögerungen führt. Gut zugänglich ist der Einsteckschlitz einer Chipkarten-Schreib/Leseeinheit nur dann, wenn der Benutzer sich über die Maschine beugt. Bei größeren Maschinen wachsen die Probleme, um den Blickkontakt herzustellen. Ohne Sichtkontakt ist ein Irrtum aber nicht sofort offensichtlich. Die Frankiermaschine arbeitet nur mit relativ teuren Chipkarten, welche selbst mit einem Mikroprozessor ausgestattet sind und somit in der Lage sind zu prüfen, ob die Frankiermaschine ein gültiges Datenwort zur Chipkarte übermittelt, bevor eine Antwort an die Frankiermaschine gesendet wird. Erfolgt aber keine Antwort bzw. Benutzeridentifikation, wird dies als Fehler in der Frankiermaschine registriert und angezeigt, bevor eine Aufforderung in der Anzeige angezeigt wird, die Chipkarte zu entfernen. Eine irrtümlich eingesteckte Telefonkarte als Betrugsversuch zu registrieren, erscheint aber als eine unangemessen hohe Forderung.

In der DE 196 05 015 C1 ist bereits eine Ausführung für eine Druckvorrichtung (JetMail®) vorgeschlagen worden, die bei einem nichtwaagerechten annähernd vertikalen Brieftransport einen Frankierdruck mittels einem hinter einer Führungsplatte in einer Ausnehmung stationär angeordneten Tintenstrahldruckkopf durchführt. Ein Drucksensor ist zur Briefanfangserkennung kurz vor der Ausnehmung für den Tintenstrahldruckkopf angeordnet und wirkt mit einem Inkrementalgeber zusammen. Durch die auf dem Transportband angeordneten Andruckelemente ist der Brieftransport schlupffrei und das während des Transportes abgeleitete Inkrementalgebersignal beeinflußt die Druckbildqualität positiv. Jedoch müßte bei einer solchen, höhere Abmaße aufweisenden Frankiermaschine, eine Chipkarten-Schreib/Leseeinheit so angeordnet und betrieben werden, daß mit sequentiell einsteckbaren Chipkarten problemlos gearbeitet werden kann. Weil der Speicherplatz auf einer Chipkarte begrenzt ist, muß ggf. Vielzahl an Chipkarten vom Benutzer bereitgehalten werden und die Frankiermaschine muß dazu eingerichtet sein, alle geladenen Daten zu speichern.

Als alternativer Weg zur Lösung des vorgenannten Problems, wonach der auf einer Chipkarte verfügbare Speicherplatz nur begrenzt vorhanden ist, wird in der US 4 802 218 vorgeschlagen, mehrere Chipkarten gleichzeitig zu verwenden, die in eine Vielzahl an Schreib-Leseeinheiten eingesteckt sind. Neben einer USER-Chipkarte für die Guthabennachladung und Abrechnung, wobei der zu druckende Portogebührenwert vom Guthaben subtrahiert wird, ist auch eine Masterkarte und eine weitere Rate-Chipkarte mit einer gespeicherten Portogebührentabelle gleichzeitig eingesteckt. Durch den Zugriff auf eine Portogebührentabelle, kann entsprechend dem eingegebenen Gewicht und Versandziel ein Portogebührenwert ermittelt werden, ohne eine ganze Tabelle in die Maschine zu laden. Da aber zu jeder Chipkarte je eine Schreib-Leseeinheit erforderlich ist, wird das Gerät zu groß und teuer. Außerdem ist ein separates Wiederauflade-Terminal erforderlich, um das Guthaben in der USER-Chipkarte wieder aufzufüllen, wobei zu dieser Wiederauflade-Funktion eine Masterkarte berechtigt. Eine Super-Visor-Karte hat Zugriff auf alle Masterkarten. Verschiedene Sicherheitslevel werden durch zugehörige Schlüsselcodes erschlossen. Ein solches System mit mehreren Slots für Chipkarten ist insgesamt sehr aufwendig.

Aus der DE 195 16 429 ist ein Verfahren für eine Zugangsautorisierung zu einer gesicherten Einrichtung mittels kartenförmiger Masterelemente bekannt, welche kartenförmige Autorisierungselemente als gültig erkennbar machen. Derartig gültig gemachte kartenförmige Autorisierungselemente erlauben später den Zugang zu der gesicherten Einrichtung, ohne daß der Benutzer im Besitz des Masterelementes ist. Auch können weitere Autorisierungselemente als gültig bestätigt werden. Der Bestätigungsvorgang schließt einen Informationsaustausch zwischen einem Masterelement höheren Ranges und einem Autorisierungselement bzw. Masterelement niedrigeren Ranges und einem elektronischem Schloß, der gesicherten Einrichtung, ein. Spezielle Kundenwünsche können dabei jedoch nicht berücksichtigt werden, denn alle so erzeugten Karten sind technisch und funktionell gleich und dienen lediglich der Verteilung von Zugangsberechtigungen einer hierarchisch gegliederten Verwaltung von gesicherten Einrichtungen.

Die Verwendung einer Chipkarte zur Zugangsberechtigung auch in unterschiedlichen Hierarchieebenen ist zwar bekannt. Bekannt ist ebenfalls, daß zur Sicherung der Authentizität eine PIN- oder Paßwort-Eingabe in unterschiedlichen Sicherheitsleveln verlangt werden. Nachteilig ist jedoch, daß es kein Sicherungsverfahren gibt, daß eine Gruppe von Sicherheitsanforderungen individuell abgestimmt abbilden kann.

Die Chipkarten werden üblicherweise vom Chipkartenhersteller und Frankiermaschinenhersteller initialisiert. Es ist jedoch für den Frankiermaschinenhersteller aufwendig, dabei die speziellen Kundenwünsche zu berücksichtigen. Für den Benutzer der Frankiermaschine besteht die Notwendigkeit seine Kundenwünsche dem Hersteller mitzuteilen, welche eine spezielle Eingabefunktion per Chipkarte betreffen. Bis der Benutzer eine entsprechend initialisierte Chipkarte zugesandt bekommt, kann die Frankiermaschine weiterhin nur per Frankiermaschinentastatur für die spezielle Eingabefunktion eingestellt werden.

Die preiswerten Chipkarten haben oft nur einen stark begrenzten Speicherplatz. Dieser Speicherplatz reicht weder aus, um kostenstellenspezifische Daten im gesamten Umfang aufzunehmen, noch um zusätzliche Sicherheitsdaten zu speichern.

Der Erfindung liegt die Aufgabe zugrunde, eine Frankiermaschine mit einer Chipkarten-Schreib/Leseeinheit zu schaffen, die mit limitiert gültigen Chipkarten versorgt wird und eine individuell- und applikationsangepaßte Sicherheit bietet, wobei nur der jeweilig erforderliche Sicherheitsaufwand realisiert wird. Diese angepaßte Sicherheit soll bei größtmöglicher Anwenderfreundlichkeit unter geringen Kosten erreicht werden.

Die Aufgabe wird mit den Merkmalen des Anspruchs 1 gelöst.

Die Erfindung basiert auf dem Gedanken, in unterschiedlichen Sicherheitsleveln unterschiedliche Sicherungsmaßnahmen zuzulassen, um eine angepaßte Sicherheit zu erreichen. Darüber hinaus ist die Maschine ausgestattet, daß vom Anwender, insbesondere vom Frankiermaschinenbenutzer, eine nach hierarchischem Prinzip individuell angepaßte Sicherheit in die Frankiermaschine hinein programmiert werden kann. Eine Masterkarte berechtigt zur Frankiermaschinen-internen Initialisierung einer Folgekarte, wobei eine Nummer in deren Chipkartenspeicher eingeschrieben wird. Im Ergebnis der vorgenannten Initialisierung ist jeder Chipkartennummer für eine Folgekarte mindestens eine Anwendungsfunktion zugeordnet und die Zuordnung ist im nichtflüchtigen Speicher der Frankiermaschine gespeichert. Erfindungsgemäß wird mit Hilfe einer fortlaufenden Nummer in jeder Chipkarte, die zusammen mit der Frankiermaschine in Verwendung kommt, das gesamte Kostenstellen-Handling innerhalb der Frankiermaschine gesteuert. Innerhalb des Programmspeichers der Frankiermaschine ist eine erste Anwendung gespeichert, die bestimmten Chipkartennummern bestimmte Privilegien (Hierarchien), Sicherheitsmaßnahmen und Kostenstellennummern zuordnet. Die zusammen mit der Frankiermaschine ausgelieferte erste Chipkarte wird als Master-Karte bezeichnet. Bei letzterer ist die Befugnis nicht eingeschränkt. Die Master-Karte enthält aber neben der fortlaufenden Nummer auch die Anwendungsbefugnis von Folgekarten limitierende Grenzdaten oder Limit-Daten, welche die Limitierung einer Operation bewirken, wenn diese nicht von der Masterkarte eingestellt und ausgelöst wird. Diese Limit-Daten bzw. Grenzdaten liefern eine applikationsangepaßte Sicherheit für eine zweite Chipkarte oder für die weiteren Folgekarten. Die hierarchisch am höchsten stehende erste Chipkarte hinterlegt ein Limit-Konto in einem geschützten Speicherbereich eines nichtflüchtigen Speichers der Frankiermaschine für die rangniedrigere zweite Chipkarte. Dieses Prinzip wird in der Hierarchie abwärts für Folgekarten fortgesetzt. So hinterlegt die hierarchisch höherstehende zweite Chipkarte ein Limit-Konto in einem geschützten Speicherbereich eines nichtflüchtigen Speichers der Frankiermaschine für eine rangniedrigere Folgekarte.

Zur Ableitung von individuell-angepaßten Chipkarten, die einen eingeschränkten Funktionsumfang ermöglichen und eine individuell angepaßte Sicherheit bieten, wird unter Verwendung der Tastatur und Anzeige und mit Hilfe des Mikroprozessors und der zugehörigen nichtflüchtigen Speicher innerhalb der Frankiermaschine eine Tabelle mit einer speziellen hierarchischen Struktur erstellt, indem die vorgespeicherte Struktur entsprechend modifiziert wird. Dabei entsteht eine Baumstruktur in der Hierarchie für die von der erfindungsgemäßen ersten Chipkarte abgeleiteten zweiten Chipkarte und weiteren Folgekarten insbesondere speziellen Funktionenanwendungskarten. Entsprechend der modifizierten Struktur wird die vorgenannte Tabelle mindestens teilweise angezeigt, bevor eine Abspeicherung erfolgt. Ein von der Master-Karte vorgegebenes Limit-Konto kann nur in einer Richtung verändert, also nur stärker limitiert werden. Das vorgenannte Limit kann damit nicht aufgehoben werden.

Dem Benutzer wird ein Satz an Chipkarten zur Verfügung gestellt, die den Zugriff auf vorwählbare Frankiermaschinenfunktionen für deren kombinierte Anwendung steuern. Außerdem wird eine gut zugängliche Chipkarten-Schreib/Leseeinheit, die hinter der Führungsplatte angeordnet ist und eine zugehörige Steuerung in der Frankiermaschine geschaffen, die Probleme beim Einstecken bzw. Irrtümer in der Auswahl einer Chipkarte vermeidet. Das Chipkarten/Frankiermaschinen-System ist beliebig erweiterbar bzw. vom Benutzer modifizierbar. Eine andere eingesteckte Chipkartenart kann von der Frankiermaschine erkannt und entsprechend ausgewertet werden. Die Frankiermaschine kann mit einer möglichst preiswerten Chipkartenart betrieben werden. Die Vorteile der eindeutigen, einfachen und fälschungssicheren Kostenstellenauswahl über Chipkarte kann unter Vermeidung der Benutzung von nennenswertem Speicherplatz auf derselben angewendet werden. Neben der Kostenstellenfreigabe kann eine Freigabe vorbestimmter weiterer Funktionen lediglich durch Einstecken einer diesbezüglich initialisierten Chipkarte in eine Chipkarten-Schreib/Leseeinheit erreicht werden.

Die Tabelle mit einer speziellen hierarchischen und modifizierbaren Struktur, in welcher Limit-Daten zugeordnet gespeichert sind, ist in entsprechenden Speicherbereichen des nichtflüchtigen Speichers der Frankiermaschine gespeichert. Die vorgenannte modifizierbare Struktur ist in ein Verzeichnis gültiger Kartennummern, Verknüpfungsbedingungen und zugehörigen Parametersätzen aufgeteilt.

Jede zweite und folgende Chipkarte enthält nur eine Chipkartennummer. Die Frankiermaschine reserviert einen Speicherplatz für einen Parameterwert für mindestens eine Grenzwertart. Das erlaubt die kostengünstige Bereitstellung eines Satzes von herstellerseitig lediglich teilweise vorinitialisierten Chipkarten. Von einem autorisierten Benutzer kann in einem dritten Teil eines Kennungsstringes nun in den Speicherbereichen der Chipkarte mittels der Chipkarten-Schreib/Leseeinheit der Frankiermaschine die gewünschte Chipkartennummer ergänzend gespeichert bzw. modifiziert werden. Ein mit der Chipkarten-Schreib/Leseeinheit verbundenes Steuergerät der Frankiermaschine hat einen nichtflüchtigen Speicher mit Speicherbereichen für eine Zuordnung von gelisteten Anwendungsfunktionen zu Limit-Daten und zu einer Chipkarte. Der Mikroprozessor des Steuergerätes der Frankiermaschine ist programmiert, die in der jeweiligen Chipkarte gespeicherte Chipkartennummer zu laden, eine Zuordnung der gelisteten Anwendungsfunktionen zur jeweiligen Chipkartennummer in einem der Speicherbereiche des nichtflüchtigen Speichers der Frankiermaschine aufzurufen und die entsprechenden im Programmspeicher gespeicherten Anwendungsprogramme unter Einhaltung des Grenzwertes durchzuführen, wobei vom autorisierten Benutzer die Zuordnung beliebig wählbar und im Rahmen der Grenzwerte in den vorgenannten Speicherbereichen speicherbar ist.

Die aufgeteilte modifizierbare Struktur ist über sogenannte Pointer wieder herstellbar, um eine entsprechende Dateneingabe in den Hauptarbeitsspeicher vorzunehmen, wobei der Mikroprozessor der Frankiermaschine eine entsprechende Funktion bzw. eine gespeicherte Reihenfolge von Funktionen entsprechend dem Anwendungsprogramm ausführt. Eine der Funktionen kann ausgeführt werden, um die Struktur in einer Tabelle mindestens teilweise anzuzeigen oder um diese modifizieren zu können.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a, Anordnung der Speicherbereiche und weiterer Bestandteile der Schaltung im Chip einer intelligenten Chipkarte,

Figur 1b, Baumstruktur der Hierarchie für die von der Master-Chipkarte abgeleiteten Funktionenanwendungskarten,

Figur 2, Blockschaltbild zur Einstellung der Funktion der Frankiermaschine und zur Ansteuerung der Druckeinrichtung,

Figur 3, Perspektivische Ansicht der Frankiermaschine von hinten,

Figur 4, Ablaufplan für eine Steuerung durch den Mikroprozessor bei der Dateneingabe mittels einer Chipkarte,

Figur 5a, Aufteilung der Struktur auf Speicherbereiche,

Figur 5b, Ablaufplan für eine Steuerung durch den Mikroprozessor beim Aufruf mindestens einer der Funktionen entsprechend der gespeicherten Struktur durch Eingabe einer Chipkartennummer

Die Chipkarten unterteilen sich in Typen, wie reine Speicherkarten, intelligente Speicherkarten, Prozessor-Chipkarte und multifunktionale Chipkarte. Nur bei letzterer sind die Anwendungsmöglichkeiten maximal, was jedoch mit einem höherem Chippreis erkauft werden muß.

Reine Speicherkarten haben ein Kontaktfeld mit I/O-Interface-Schaltung, Adresszähler und -dekoder zusammen mit einem nichtflüchtigen Schreib/Lese-Speicher EEPROM auf dem gemeinsamen Chip integriert.

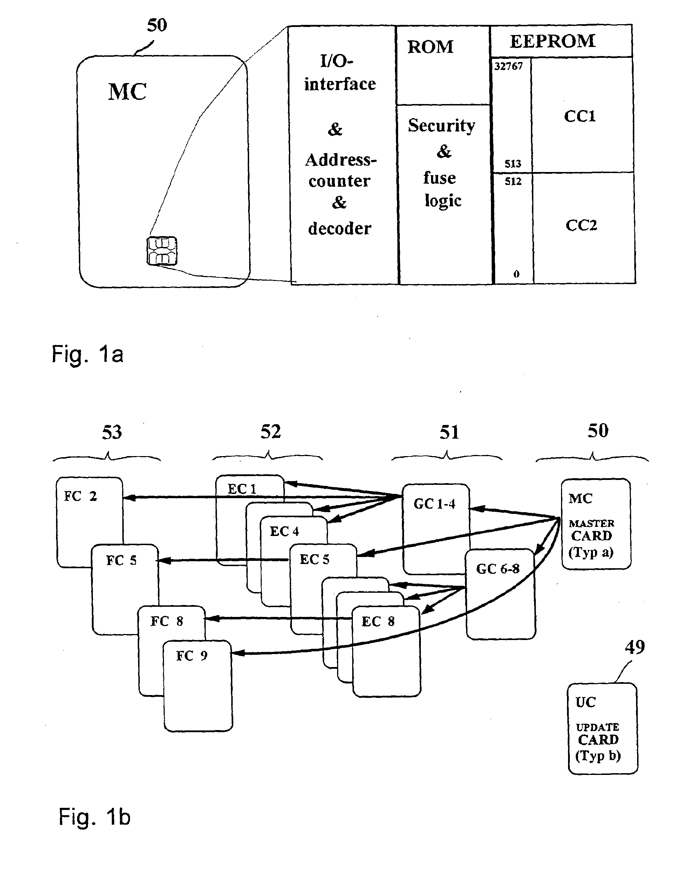

Eine Optimierung hinsichtlich Preis und Anwendungsmöglichkeiten stellen intelligente Speicherkarten (Fig.1a) dar.

In der Figur 1a ist eine Anordnung der Speicherbereiche und weiteren Bestandteile der Schaltung im Chip einer intelligenten Chipkarte dargestellt. Unter dem Kontaktfeld des Chips befinden sich bekanntlich die Speicher, deren Speicherbereiche in ungeschützte und geschützte Bereiche aufgeteilt ist. In beiden Bereichen werden vom Frankiermaschinen- und Chipkartenhersteller erzeugte sonstige Daten gespeichert. Zusammen mit dem nichtflüchtigen Schreib/Lese-Speicher EEPROM, mit dem ungeschützten CC1 und geschützten Speicherbereich CC2 ist auf dem gemeinsamen Chip der intelligenten Speicherkarte auch ein Nurlesespeicher ROM für einen allgemeinen Speicherbereich integriert.

Mit einer speziellen Hardware ist im Chip eine zusätzliche Sicherheits-und Schutzlogik realisiert, welche eine PIN-Prüfung durchführt, bevor auf sicherheitsrelevante Daten im geschützten Speicherbereich CC2 zugegriffen wird. Eine Chipkartennummer im Kennungsstring ist teilweise im ROM und/oder im geschützten Speicherbereich CC2 sowie im ungeschützten Speicherbereich CC1 abgespeichert. Der Teil der Chipkartennummer im ungeschützten Speicherbereich CC1 kann mit Hilfe einer höheren Autorität verändert werden. Im geschützten Speicherbereich CC2 einer ersten Chipkarte sind zusammen mit dem einem Teil der Chipkartennummer sicherheitsrelevante Daten gespeichert, welche zeitliche, stückzahl- oder wertgrößenmäßige Grenzdaten darstellen oder Funktionen beinhalten, welche eine Limitierung einer Operation bewirken.

Die Autorisierung von Folgekarten mittels einer ersten Chipkarte (Masterkarte) kann somit beispielsweise zeitlich limitiert gültig sein, wenn entsprechende gespeicherte sicherheitsrelevante Daten in eine Frankiermaschine geladen und dort als Bedingung für eine autorisierte Folgekarte nichtflüchtig gespeichert werden.

Der geschützte Bereich ist auf verschiedene Weise erzeugt worden. Ein erster Teil des Kennungsstrings ist nur für den Chipkartenhersteller im Nurlesespeicher ROM beschreibbar. Ein zweiter Teil des Kennungsstrings ist nur für den Frankiermaschinenhersteller im geschützten nichtflüchtigen EEPROM-Bereich beschreibbar. Für den Kunden ist im ungeschütztem Datenbereich ein dritter Teil des Kennungsstrings vorgesehen. Für Masterkarten wird dieser Teil vom Frankiermaschinenhersteller beschrieben. Bei weiteren Karten und Folgekarten ist für den Kunden der dritte Teil des Kennungsstrings veränderbar. Nach einer vorbestimmten, vorzugsweise menügesteuerten, Eingabe über die Frankiermaschinentastatur erlangt der Benutzer Zugriff auf diesen Bereich. Der vorgenannte Zugriff ist nur dem autorisierten Benutzer möglich. Letzterer verfügt beispielsweise über eine Chipkarte, welche in einer Hierarchie auf einer höheren Stufe steht, als die zu initialisierende Chipkarte. Durch ein benutzerauthorisiertes Einschreiben im dritten Teil des Kennungsstrings und einer Frankiermaschinen-internen Initialisierung einer Zuordnung entsteht für eine Gruppe von Chipkarten eine hierarchische Struktur, die - wie in der Figur 1b gezeigt wird - ausgehend von einer ersten Chipkarte vom Frankiermaschinenbenutzer beliebig erweiter- und änderbar ist. Die erste Chipkarte 50 steht auf der obersten Hierarchiestufe und wird nachfolgend mit Master-Karte bezeichnet. Die in der Gruppe 51 bezeichneten zweiten Chipkarten stehen auf der ersten Hierarchiestufe, die in der Gruppe 52 bezeichneten weiteren Chipkarten stehen auf der zweiten Hierarchiestufe, die in der Gruppe 53 bezeichneten nachfolgenden Chipkarten stehen auf der dritten Hierarchiestufe, u.s.w., wobei solche Karten aus diesen Gruppen von Chipkarten auch als Folge-Karten bezeichnet werden, für welche stufenweise die Funktionenanwendungsberechtigung in wählbarer Weise limitiert und tabellarisch gespeichert ist. Die erste Karte MC könnte dann die Master-Karte (Hierarchie 0) sein, mit ihr lassen sich alle Initialisierungen und Änderungen vornehmen. Beispielsweise existieren im ersten Ast weitere 5 Karten mit den fortlaufenden Nummern 002 bis 006 für vier der Kostenstellen. Es wird die zweite Karte 51 für den Zugriff auf die Kostenstellen 1 bis 4 als Gruppenkarte GC 1-4 autorisiert (Hierarchie 1). Die weiteren Folge-Karten 52 sind jeweils nur für eine einzige Kostenstelle als Einzelkarte EC 1, EC 3, EC 4 autorisiert (Hierarchie 2). Die zweite Karte 51 kann Änderungen in den Folge-Karten 52, d.h. in den Einzelkarten EC1, EC 3, EC 4 im Rahmen der eigenen Autorisierung gestatten. Die vorgenommene Änderung der Kostenstelle, nämlich KST-Nummer 1, 3 und 4 betrifft eine Änderung in der Zuordnung von Anwendungsfunktionen. Eine solche kann mit der Gruppenkarte 51 GC 1-4, jedoch nicht für die erste Karte 50 MC vorgenommen werden. Mit der Gruppenkarte 51 GC 1-4 kann auf eine der Kostenstellen, nämlich KST-Nummern 1 bis 4, der verfrankierte Portowert gebucht werden. Eine mittels der Gruppenkarte GC 1-4 initialisierte einzelne Funktionskarte FC 2 gestattet deren Besitzer nur eine informationelle Abfrage der Buchungen unter der Kostenstellen-Nummer 2 und nur Null-Wert-Frankierungen mit der Frankiermaschine vorzunehmen. Weiterhin ist es in einem zweiten Ast vorgesehen, unter Auslassung der Erzeugung einer Gruppenkarte nur eine Einzelkarte EC 5 und eine Funktionskarte FC 5 zu erzeugen, welche beide der fünften Kostenstelle zugeordnet sind. Eine mittels der Einzelkarte EC 5 initialisierte einzelne Funktionskarte FC 5 gestattet deren Besitzer nur eine informationelle Abfrage der Buchungen unter der Kostenstellen-Nummer 5 und Null-Wert-Frankierungen mit der Frankiermaschine vorzunehmen.

Auch kann in einem Ast unter Auslassung weiterer Hierarchiestufen nur eine einer untersten Hierarchiestufe zugeordnete Folge-Karte FC 9 initialisiert werden. Die Karten der untersten Hierarchiestufe sind im Funktionenanwendungsumfang am weitesten beschränkt.

Ebenso kann in einem dritten Ast ohne Auslassung von Hierarchiestufen stufenweise eine Anzahl von zu jeder Hierarchiestufe zugeordneten Folge-Karten initialisiert werden, d.h. eine Gruppenkarte GC 6-8 als Folge-Karte 51 in der ersten Hierarchiestufe, eine Einzelkarte EC 8 als Folge-Karte 52 in der zweiten Hierarchiestufe und eine Funktionskarte FC 8 als Folge-Karte 53 in der dritten Hierarchiestufe.

Der Schutz der Karten vor Auslesen der fortlaufenden Nummer ist in bekannter Weise durch PIN oder andere Sicherheitsalgorithmen möglich. Bei Verlust der Master-Karte ist nur über eine Information des Frankiermaschinenherstellers (und entsprechenden Nachweis der Authentizität) ein Ersatz möglich. Das Sperren bzw. die Freigabe aller anderen Karten ist durch die Master-Karte möglich. Eine weitere Sicherheit bei der Initialisierung des Systems mit Hilfe der Master-Karte ist dadurch möglich, daß nur physisch vorhandene Karten initialisierbar sind, dadurch werden die geheimen fortlaufenden Nummern der Karten geschützt. Bei einem Folgekarten-Verlust kann ein Sperren des entsprechenden Speicherbereiches in der Frankiermaschine erfolgen.

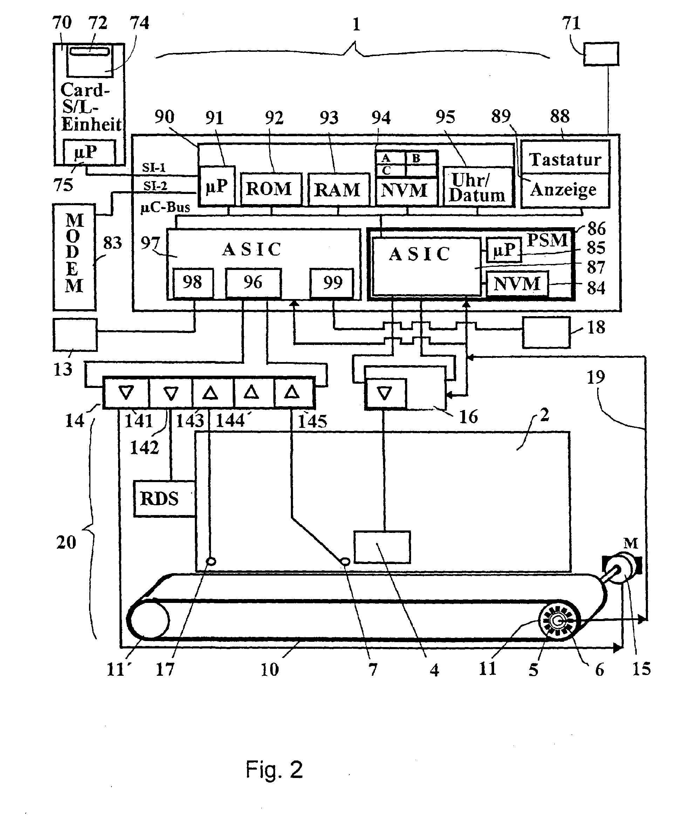

Die Figur 2 zeigt ein Blockschaltbild zur Einstellung der Funktion der Frankiermaschine und zur Ansteuerung der Druckeinrichtung 20 mit einer Chipkarten-Schreib/Lese-Einheit 70 und mit einer Steuereinrichtung 1 der Frankiermaschine. Die Steuereinrichtung 1 bildet das eigentliche Meter und umfaßt ein erstes Steuergerät 90, eine Tastatur 88 und eine Anzeigeeinheit 89 sowie einen ersten und zweiten anwendungsspezifischen Schaltkreis ASIC 87 und 97. Das erste Steuergerät 90 enthält einen ersten Mikroprozessor 91 und an sich bekannte Speichermittel 92, 93, 94 sowie einen Uhren/Datumsschaltkreis 95. Im nichtflüchtigen Speicher 94 sind Bereiche zur Speicherung der Abrechnungsdaten vorgesehen, die den Kostenstellen zugeordnet sind.

Der erste anwendungsspezifische Schaltkreis ASIC 87 bildet zusammen mit einem zweiten Mikroprozessor 85 und einem nichtflüchtigen Speicher 84 ein postalisches Sicherheitsmittel PSM 86. Das postalische Sicherheitsmittel PSM 86 wird von einem gesicherten Gehäuse umschlossen und weist eine schnelle serielle Schnittstelle zur Druckersteuerung 16 auf. Vor jedem Frankierabdruck erfolgt eine hardwaremäßige Abrechnung im ersten anwendungsspezifischen Schaltkreis ASIC 87. Die Abrechnung erfolgt unabhängig von Kostenstellen. Der zweiten Mikroprozessor 85 enthält einen - nicht gezeigten - integrierten Festwertspeicher int.ROM mit dem speziellen Anwendungsprogramm, was für die Frankiermaschine von der Postbehörde bzw. vom jeweiligen Postbeförderer zugelassen ist. Das postalische Sicherheitsmittel PSM 86 kann so ausgeführt sein, wie in der europäischen Anmeldung EP 789 333 A3 näher beschrieben wurde.

Beide vorgenannte ASIC's sind über den parallelen µC-Bus mindestens mit dem Steuergerät 90 und der Anzeigeeinheit 89 verbunden. Der erste Mikroprozessor 91 weist vorzugsweise Anschlüsse für die Tastatur 88, eine serielle Schnittstelle SI-1 für den Anschluß der Chipkarten-Schreib/Lese-Einheit 70 und eine serielle Schnittstelle SI-2 für den optionalen Anschluß eines MODEMs auf. Mittels des MODEMs kann das im nichtflüchtigen Speicher 84 des postalischen Sicherheitsmittels PSM 86 gespeicherte Guthaben erhöht werden.

Es ist vorgesehen, daß der zweite ASIC 97 eine serielle Schnittstellenschaltung 98 zu einem im Poststrom vorschalteten Gerät 13, eine serielle Schnittstellenschaltung 96 zur Druckeinrichtung 20 und eine serielle Schnittstellenschaltung 99 zu einem der Druckeinrichtung 20 im Poststrom nachgeschalteten Gerät 18 aufweist. Der nicht vorveröffentlichten deutschen Anmeldung 197 11 997.2 ist eine Ausführungsvariante für die Peripherieschnittstelle entnehmbar, welche für mehrere Peripheriegeräte (Stationen) geeignet ist. Sie trägt den Titel: Anordnung zur Kommunikation zwischen einer Basisstation und weiteren Stationen einer Postbearbeitungsmaschine und zu deren Notabschaltung.

Die Schnittstellenschaltung 96 gekoppelt mit der in der Maschinenbasis befindlichen Schnittstellenschaltung 14 stellt mindestens eine Verbindung zu den Sensoren 6, 7, 17 und zu den Aktoren, beispielsweise zum Antriebsmotor 15 für die Walze 11 und zu einer Reinigungs- und Dichtstation RDS für den Tintenstrahldruckkopf 4, sowie zum Tintenstrahldruckkopf 4 der Maschinenbasis her. Die prinzipielle Anordnung und das Zusammenspiel zwischen Tintenstrahldruckkopf und der RDS sind der nicht vorveröffentlichten deutschen Anmeldung 197 26 642.8 entnehmbar, mit dem Titel: Anordnung zur Positionierung eines Tintenstrahldruckkopfes und einer Reinigungs- und Dichtvorrichtung.

Einer der in der Führungsplatte 2 angeordneten Sensoren 7, 17 ist der Sensor 17 und dient zur Vorbereitung der Druckauslösung beim Brieftransport. Der Sensor 7 dient zur Briefanfangserkennung zwecks Druckauslösung beim Brieftransport. Die Transporteinrichtung besteht aus einem Transportband 10 und zwei Walzen 11,11'. Eine der Walzen ist die mit einem Motor 15 ausgestattete Antriebswalze 11, eine andere ist die mitlaufende Spannwalze 11'. Vorzugsweise ist die Antriebswalze 11 als Zahnwalze ausgeführt, entsprechend ist auch das Transportband 10 als Zahnriemen ausgeführt, was die eindeutige Kraftübertragung sichert. Ein Encoder 5, 6 ist mit einer der Walzen 11, 11' gekoppelt. Vorzugsweise sitzt die Antriebswalze 11 mit einem Inkrementalgeber 5 fest auf einer Achse. Der Inkrementalgeber 5 ist beispielsweise als Schlitzscheibe ausgeführt, die mit einer Lichtschranke 6 zusammen wirkt.

Es ist vorgesehen, daß die einzelnen Druckelemente des Druckkopfes innerhalb seines Gehäuses mit einer Druckkopfelektronik verbunden sind und daß der Druckkopf für einen rein elektronischen Druck ansteuerbar ist. Die Drucksteuerung erfolgt auf Basis der Wegsteuerung, wobei der gewählte Stempelversatz berücksichtigt wird, welcher per Tastatur 88 direkt oder bei Bedarf indirekt per Chipkarte eingegeben und im Speicher NVM 94 nichtflüchtig gespeichert wird. Ein geplanter Abdruck ergibt sich somit aus Stempelversatz (ohne Drucken), dem Frankierdruckbild und gegebenfalls weiteren Druckbildem für Werbeklischee, Versandinformationen (Wahldrucke) und zusätzlichen editierbaren Mitteilungen.

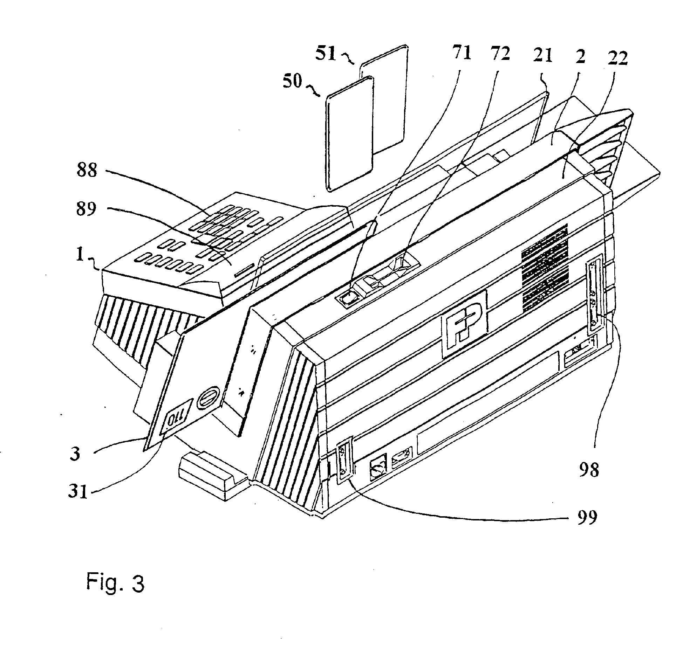

In der Figur 3 ist eine perspektivische Ansicht der Frankiermaschine von hinten dargestellt. Die Frankiermaschine ist mit einer Chipkarten-Schreib/Leseeinheit 70 ausgestattet, die hinter der Führungsplatte 2 angeordnet und von der Gehäuseoberkante 22 zugänglich ist. Nach dem Einschalten der Frankiermaschine mittels dem Schalter 71 wird eine Chipkarte 50 von oben nach unten in den Einsteckschlitz 72 eingesteckt und ist vom Benutzer für bestimmte Anwendungen programmierbar. Das erfolgt im Rahmen der von den Herstellern vorgegebenen Grenzen mit der Benutzerschnittstelle 88, 89 der Steuereinrichtung 1 des Meters. Die Folgekarten werden für vorbestimmte Funktionsanwendungen für die jeweilige Frankiermaschine vom Benutzer selbst eingerichtet. Zusätzlich können auch Chipkarten für vorbestimmte Funktionsanwendungen für die jeweiligen Peripheriegeräte der Frankiermaschine vom Benutzer selbst eingerichtet werden. Die Peripheriegeräte der Frankiermaschine sind an den Schnittstellen 98 und 99 elektrisch anschließbar und somit vom Meter entsprechend der Eingabe per Chipkarte ansteuerbar. Ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 2 seitlich begrenzt.

Mit dem Einstecken einer ersten Chipkarte 50, die mit der Frankiermaschine zusammen ausgeliefert worden ist, wird eine vorbestimmte Kostenstelle eingestellt. Beispielsweise wird die Kostenstelle 1 voreingestellt, auf welche die Buchung erfolgt, wenn per Tastatur keine anderen vorbestimmten Eingaben getätigt werden, um den Zugriff auf andere Kostenstellen zu erlangen.

Die Frankiermaschine enthält in ihrem Programmspeicher 92 ein entsprechendes Anwendungsprogramm, so daß eine in die Chipkarten-Schreib/Leseeinheit 70 eingesteckte erste Chipkarte 50 eine Einstellung der Frankiermaschine für mindestens eine Funktionsanwendung auf der höchsten Hierarchieebene gestattet.

In einer Anwendung ist vorgesehen, daß die Steuereinrichtung 1 ein mit einem Mikroprozessor 91 mit zugehörigen Speichern 92, 93, 94, 95 ausgestattetes Steuergerät 90 und eine angeschlossene Benutzerschnittstelle 88, 89 aufweist, die in Abhängigkeit einer vorbestimmten Eingabe eine top-down-Initialisierung von mindestens einer eingesteckten aus einer Anzahl von weiteren Chipkarten 51, 52, 53 durch den Benutzer gestatten, um in Verbindung mit geeignet initialisierten Chipkarten die Funktionseingabe und die Verwaltung von zu buchenden Kostenstellendaten zu vereinfachen, wobei die vorgenannten weiteren Chipkarten 51, 52, 53 sequentiell in einen Einsteckschlitz 72 der Chipkarten-Schreib/Leseeinheit 70 eingesteckt und initialisiert werden, wobei unter Verwendung der Tastatur 88 und Anzeige 89 und mit Hilfe des Mikroprozessors 91 und der zugehörigen nichtflüchtigen Speicher innerhalb der Frankiermaschine eine Tabelle mit einer speziellen hierarchischen Struktur erstellt wird, indem die vorgespeicherte Struktur entsprechend modifiziert und einer jeweiligen Chipkartennummer zugeordnet in einem der zugehörigen nichtflüchtigen Speicher 94, 95 gespeichert wird, wobei die Chipkartennummer in einem dafür vorgesehenen Teil eines in den geschützten Speicherbereichen der weiteren Chipkarten 51, 52, 53 gespeicherten Kennungsstrings gespeichert wird.

Eine kostengünstige Chipkarte mit nur geringem Speicherplatz wird nachfolgend mit Typ a bezeichnet. Nach ISO7816 kann eine Speicherkarte mit 256 Byte, wie z.B. OMC240SP von der Firma Orga, verwendet werden.

Eine andere Chipkarte mit viel Speicherplatz wird nachfolgend mit Typ b bezeichnet. Beispielsweise kann eine I$^2$CBus Speicherkarte mit 32 Kbyte nach ISO7816, insbesondere AM2C256 von der Firma AMMI, verwendet werden. Diese enthält einen Chip AT24C256 von der Firma Atmel. Weitere Chipkarten werden nachfolgend mit Typ n bezeichnet. Beispielsweise kann eine einen Mikroprozessor aufweisende Chipkarte mit 8 Kbyte verwendet werden. Die weiteren Chipkarten der Typen b bis n betreffen beispielsweise folgende Funktionsanwendungen:

* Nachlade-Möglichkeit der Portogebührentabellen über Chipkarte 49.
* Klischee-Nachladen über Chipkarten (einzeln oder im Block)
* Stempelbilder-Nachladen über Chipkarten (Tagesstempel).
* Chipkarten mit zeitlimitierter Funktionenanwendung.
* Chipkarten mit PIN-Autorisierung von Funktionen.
* Chipkarten zur Einstellung der Peripheriegerätefunktion.
* Chipkarten zur Einstellung der Systemkonfigurierung.
* Chipkarten zur Aktivierung programmierter Druckbilder.

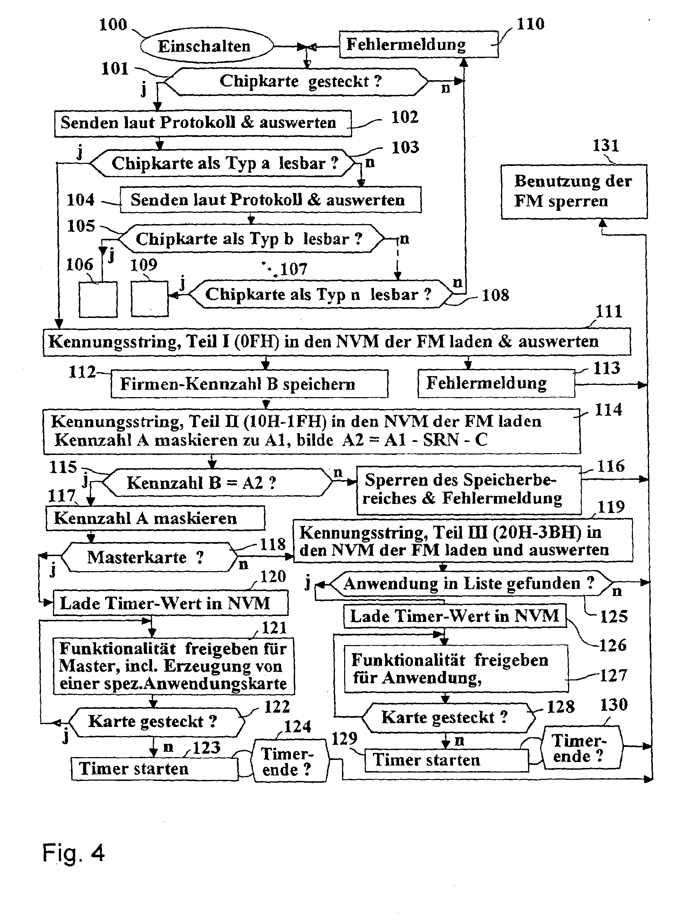

In der Figur 4 ist ein Ablaufplan für eine Steuerung durch den Mikroprozessor der Frankiermaschine bei der Dateneingabe mittels einer Chipkarte dargestellt.

Nach einem Einschalten eines - nicht dargestellten - Netzteiles der Frankiermaschine mit dem Schalter 71, was im Schritt 100 vom Mikroprozessor 91 der Frankiermaschine registriert wird, signalisiert ein mit einer Kontaktiereinrichtung 74 der Chipkarten-Schreib/Leseeinheit 70 verbundener Mikroprozessor 75 dem Mikroprozessor 91 der Frankiermaschine, wenn eine Chipkarte in den Einsteckschlitz 72 eingesteckt ist, was im Schritt 101 vom Mikroprozessor 91 der Frankiermaschine registriert wird. Zwischen der Chipkarten-Schreib/Leseeinheit 70 und der Chipkarte erfolgt dann eine Kommunikation nach einem ersten vorbestimmten Protokoll und eine Auswertung im Schritt 102, ob die Chipkarte als Typ a lesbar ist. Ist das der Fall, wird vom Abfrageschritt 103 auf einen Schritt 111 verzweigt, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird. Wenn aber die Chipkarte als Typ a nicht lesbar ist, wird vom Abfrageschritt 103 auf einen Schritt 104 verzweigt, um eine Kommunikation nach einem zweiten vorbestimmten Protokoll und eine Auswertung im Schritt 104, ob die Chipkarte als Typ b lesbar ist vorzunehmen. Ist also die Chipkarte als Typ b lesbar, wird vom Abfrageschritt 105 zur weiteren Datenverarbeitung durch

7

den Mikroprozessor 91 der Frankiermaschine auf einen Schritt 106 verzweigt. In vergleichbarer Weise werden gegebenenfalls weitere Protokolle durchlaufen (nicht gezeigte Schritte 107), zur Feststellung im Abfrageschritt 108, ob die Chipkarte als Typ n lesbar ist, um dann zur weiteren Datenverarbeitung durch den Mikroprozessor 91 der Frankiermaschine auf einen entsprechenden Schritt 109 zu verzweigen. Anderenfalls, wenn der Typ der Chipkarte nicht erkannt wird, erfolgt nach einer Fehlermeldung im Schritt 110 eine Rückverzweigung auf den Schritt 101.

Im Unterschied zum US 5,490,077, wo die Reihenfolge festliegt und eine Chipkarte A zum Portogebührentabellenladen vor einer Chipkarte B gesteckt werden soll, welche beispielsweise eine Kostenstelle einstellt, ist die Reihenfolge für das sequentielle Einstecken einer Reihe von Chipkarten beliebig. Zusätzlich kann sich gemäß dem erfindungsgemäßen Ablaufplan nach Fig.4 der Chipkarten-Typ unterscheiden. In vorteilhafter Weise wird ein entsprechend der Anwendungsart geeigneter Chipkarten-Typ gewählt, so daß ein teurer Chipkarten-Typ nur in den Fällen eingesetzt werden braucht, wo keine Alternative besteht.

Es gibt beim US 5,490,077 keine Masterkarte, d.h. die Chipkarten sind alle technisch und funktionell gleich. Eine Zuordnung der 5-stelligen Kostenstellennummer KST-Nr. ist nur dem Hersteller möglich. Im Unterschied dazu ist erfindungsgemäß durch den Benutzer eine freie Zuordnung von drei Stellen der 5-stelligen KST-Nr. möglich.

Ein Zeitfenster für das Einstecken einer Chipkarte ist beim US 5,490,077 eine unveränderliche feste Zeitperiode. Für das erste Einstecken der Chipkarte ist erfindungsgemäß nun kein Zeitlimit vorgegeben. In vorteilhafter Weise wird in einer dem Kennungsstring der Chipkarten entsprechenden Anwendungsart ein Timer-Wert in einen Bereich der nichtflüchtigen Speicher 94 oder 95 der Frankiermaschine geladen, welcher einen Zähler ausbildet, der ein Zeitfenster für eine Nachfolgehandlung definiert, die beispielsweise mit einer Folge-Chipkarte ausgeführt wird.

Wenn vom Abfrageschritt 103 auf einen Schritt 111 verzweigt wird, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird, kommt ein Chipkarten-Typ a zum Einsatz, bei welchem aus einer gespeicherten Firmen-Kennzahl B eine Information für den weiteren Betrieb der Frankiermaschine abgeleitet werden kann. Gegebenenfalls prüft der Mikroprozessor 91 die vorgenannte Firmen-Kennzahl B in bekannter Weise zusätzlich auf Vorliegen einer gültigen Firmen-ID. Anderenfalls wird im optionalen Schritt 113 eine Fehlermeldung abgegeben. Im Schritt 112 wird die Firmen-Kennzahl B in einem der nichtflüchtigen Speicherbereiche der Frankiermaschine gespeichert, um dann auf einen Schritt 114 zu verzweigen.

Im Schritt 114 wird ein Teil II des Kennungsstrings in den nichtflüchtigen Speicher 94 der Frankiermaschine geladen, wobei durch den Mikroprozessor 91 der Frankiermaschine eine Maskierung der Anfangs-Kennzahl A zur Ableitung einer ersten Kennzahl A1 erfolgt, mit welcher anschließend eine Rechenoperation zur Bildung einer zweiten Kennzahl A2 durchgeführt wird, um nachfolgend zu prüfen, ob der dem Kennungsstring entstammende erste Teil I und die Kennzahl A2 zueinander ein vorbestimtes Verhältnis haben. Zur Bildung einer zweiten Kennzahl A2 erfolgt eine Rechenoperation der Form:

$$A2 = A1 - SRN - C \qquad\qquad (1)$$

mit der Serien-Nummer SRN der Frankiermaschine und mit einer geheimen Konstanten C.

Vom Mikroprozessor 91 der Frankiermaschine ist unter Verwendung der Firmenkennzahl B nachfolgend zu prüfen:

$$\text{Kennzahl B} = A2 \qquad\qquad (2)$$

In Auswertung der Gleichung (2) erfolgt bei mangelndem vorbestimmten Verhältnis ein Sperren des Speicherbereiches in der Frankiermaschine für vorbestimmte Anwendungen im Schritt 116 oder anderenfalls, beispielsweise falls die Firmen-Kennnummer (Firmen-ID) gleich der gebildeten zweiten Kennzahl A2 ist, wird auf einen Schritt 117 verzweigt.

Nun kann eine weitere Maskierung der Kennzahl vorgenommen werden, um die Master-Karte zu identifizieren.

Im Abfrageschritt 118 wird geprüft, ob eine Master-Karte vorliegt. Ist das der Fall wird auf einen Schritt 120 verzweigt, um einen Timer-Wert in den nichtflüchtigen Speicher 94 der Frankiermaschine zu laden, wobei durch den Mikroprozessor 91 der Frankiermaschine im Schritt 121 die Funktionalität freigegeben wird, welche im Programmspeicher 92 der Frankiermaschine für die Master-Karte vorgesehen ist. Diese Funktionalität schließt eine Erzeugung einer speziellen Funktionenanwendungs-Karte mittels der Frankiermaschine ein, was in einer parallelen Anmeldung näher erläutert wird. Im Schritt 122 wird geprüft, ob die Karte noch immer gesteckt ist. Ist das der Fall ist die Funktionalität weiter freigegeben. Anderenfalls wird im Schritt 123 ein Timer gestartet. Der Timer ist beispielsweise ein mittels Speicherzellen im flüchtigen Speicher 93 oder in einem der nichtflüchtigen Speicher 94, 95 der Frankiermaschine realisierter Rückwärtszähler und der Oszillator im Uhren/DatumsSchaltkreis 95 liefert einen entsprechenden Takt. Beim im Schritt 124 festgestellten Timerende wird zum Beispiel bei Erreichen des Zählwertes Null ein Interrupt für den Mikroprozessor 91 der Frankiermaschine ausgelöst. Im Folgeschritt 131 wird dann die weitere Benutzung der Frankiermaschine für mindestens die eine Funktionalität Frankieren gesperrt.

Wird im Abfrageschritt 118 festgestellt, daß keine Master-Karte vorliegt, wird auf einen Schritt 119 verzweigt, um den Teil III des Kennungsstringes in den nichtflüchtigen Speicher 94 oder 95 der Frankiermaschine zu laden und um eine Auswertung hinsichtlich der dort abstammenden Chipkarten-nummer vorzunehmen. Eine Anzahl von unterschiedlichen Anwendungsfunktionalitäten ist in einem Speicherbereich des nichtflüchtigen Speichers 94 oder 95 der Frankiermaschine gelistet, wo jeder Anwendungsfunktionalität eine entsprechende Chipkartennummer zugeordnet ist. Ist in der Liste einer bestimmten Chipkartennummer keine Anwendung zugeordnet gespeichert, wird vom Abfrageschritt 125 auf den Folgeschritt 131 verzweigt, um die weitere Benutzung der Frankiermaschine für mindestens die eine Funktionalität Frankieren zu sperren. Anderenfalls wird im Schritt 126 ein Timer-Wert geladen und im Schritt 127 wird die gelistete Funktionalität entsprechend der Chipkartennummer freigegeben. Im Schritt 128 wird geprüft, ob die Karte noch immer gesteckt ist. Ist das der Fall, erfolgt eine Rückverzweigung und die Funktionalität ist weiter freigegeben. Anderenfalls wird im Schritt 129 der Timer gestartet. Bei Timerende wird ein Interrupt für den Mikroprozessor 91 der Frankiermaschine ausgelöst und auf den Folgeschritt 131 verzweigt.

Der Kennungsstring hat eine schlüsselartige Funktion. Der Kennungsstring ist nichtflüchtig in der Chipkarte so gespeichert, daß mehrere Sicherheitsbereiche einbezogen sind, wobei zur Veränderung des im jeweiligen Sicherheitsbereich gespeicherten Teils des Kennungsstrings unterschiedliche Sicherheitsanforderungen zu erfüllen sind. Nachdem durch die Hersteller der erste und zweite Teil des Kennungsstrings beschrieben wurde, kann ein Benutzer der Frankiermaschine mit selbiger den dritten Teil des Kennungsstrings mit einer Chipkartennummer beschreiben. Der Mikroprozessors 91 ist programmiert, eine in der Chipkarte gespeicherte Chipkartennummer zu verändern und eine Zuordnung der Chipkartennummer zu gelisteten Anwendungsfunktionen im nichtflüchtigen Speicher der Frankiermaschine abzuspeichern.

Es ist vorgesehen, daß der Mikroprozessor 91 des Steuergerätes 90 programmiert ist, um in Verbindung mit geeignet initialisierten Chipkarten die Funktionseingabe und die Verwaltung von zu buchenden Kostenstellendaten zu vereinfachen, wobei die Funktionseingabe die top-down-Initialisierung von weiteren Chipkarten einschließt.

Erfindungsgemäß wird der Kennungsstring in der Frankiermaschine ausgehend von der höchsten Sicherheitsstufe abwärts geprüft und erschließt alle anwendungsspezifisch erforderlichen Speicherbereiche im nichtflüchtigen Speicher der Frankiermaschine. Eine erkannte Lücke im Kennungsstring erzeugt eine Fehlermeldung und hat eine Sperrung des betreffenden Speicherbereiches im nichtflüchtigen Speicher der Frankiermaschine und/oder der Chipkarte zur Folge.

Die Chipkarten-Schreib/Leseeinheit 70 besteht aus einem zugehörigen mechanischen Träger für die Mikroprozessorkarte und Kontaktiereinheit 74. Letztere gestattet eine sichere mechanische Halterung der Chipkarte in Lese-Position und eindeutige Signalisierung des Erreichens der Leseposition der Chipkarte in der Kontaktierungseinheit, beispielsweise nach dem Push/Push-Prinzip taktil durch Druckpunkt signalisiert, Eject-Taste oder Display/Beeper-Meldung der Frankiermaschine, eine zuverlässige elektrische Kontaktierung von kontaktbehafteten Chipkarten gemäß ISO 7816 für mindestens 100.000 Kontaktierungszyklen sowie eine leichte Benutzbarkeit beim Stecken und Ziehen der Chipkarte. Die Mikroprozessorkarte mit dem Mikroprozessor 75 besitzt eine einprogrammierte Lesefähigkeit für alle Arten von Speicherkarten, sowie für Chipkarten mit und ohne PIN-Codierung. Eine Ver- oder Entschlüsselung für Sicherheitsalgorithmen (z. B. RSA, DES) ist nicht erforderlich. Das Interface zur FM ist eine serielle Schnittstelle gemäß RS232-Standard. Die Daten-Übertragungsrate beträgt min. 1,2 K Baud. Eine Selbsttestfunktion mit Bereitschaftsmeldung ist ausführbar bzw. wird nach Einschalten der Stromversorgung mittels Schalter 71 selbsttätig ausgeführt. Die in den Einsteckschlitz 72 eingesteckte Masterkarte 50 erteilt mindestens eine Zugangsberechtigung zur Gesamt-Kostenstelle, d.h. alle ausgegebenen Master-Chipkarten greifen nur auf diese Kostenstelle zu. Danach existiert die Wahlmöglichkeit einer anderen Kostenstelle über Tastatur. Unter anderem sind Master-Chipkarten zur erfindungsgemäßen Definition der Chipkarten/Kostenstellen-Beziehung und zum Freigeben/Sperren von Karten vorgesehen. Es kann zur Erweiterung des Funktionsumfanges eine Zugriffsmöglichkeit auf definierte Kostenstellen über die Folgekarten mittels der Frankiermaschine geschaffen werden, wobei eine Speicherung der Zuordnung entsprechend einer beliebigen Hierarchie möglich ist.

Die Chipkarten vom Typ a sind für alle Funktionenanwendungen Zugang/Kostenstellenhandling geeignet. Jede Frankiermaschine mit Chipkartenleser wird mindestens mit einer Masterkarte ausgeliefert. Die zweite und weitere ausgelieferte Karten sind sogenannte Folgekarten. Jede Chipkarte hat eine laufende Chipkarten-Nummer, die eine eindeutige Kennung für jede Chipkarte ist, d. h. die Chipkarten sind im personalisierten Zustand noch nicht bestimmten Frankiermaschinen zugeordnet. Die neu in Betrieb zu nehmende Frankiermaschine soll selbsttätig die erste gesteckte Chipkarte als Masterkarte werten und eine entsprechende Chipkartennummer in ihren Speichern hinterlegen. Die Zuordnung der Funktionalität jeder existierenden bzw. nachgelieferten Karte geschieht frankiermaschinen-intern über eine Tabelle. Die Funktionalität der Masterkarte ist wie folgt definiert:

a) Als Voreinstellung wird die Kostenstellen KST 1 angewählt, dieser Voreinstell-Wert ist änderbar.

b) Es ist manuell möglich, Kostenstellen KST einzurichten, zu löschen und anzuwählen.

c) Es ist möglich Folgekarten bestimmten Kostenstellen KST zuzuordnen, Zuordnungen zu ändern oder zu löschen.

d) Alle verfügbaren Verknüpfungsbedingungen sind definierbar. Das betrifft auch die Zuordnung von Limit-Daten zu Folgekarten, bzw. die Tabelle ist entsprechend mit Eingabe-Daten auszufüllen.

e) Zugriff auf die volle Funktionalität der Frankiermaschine.

Die Funktionalität der Folgekarte ist wie folgt definiert:

a) Automatisches Anwählen einer festgelegten Kostenstelle KST oder KST-Gruppe mit deren Verknüpfungsbedingungen (Werbeklischee-Nr., evtl. mit Wertbegrenzung je Zeiteinheit, Limit-Daten, etc.)

b) Kostenstellen/Werbeklischee-Zuordnungen setzen, ändern oder löschen. Freie Wahl aller in der FM vorhandenen Klischees.

c) Funktion "Folgekarten-Duplizieren".

Die Sicherheit in punkto Karten-Kopierschutz wird durch hersteller- und anwenderspezifische Informationen in einem schreibgeschützten Bereich der Karte gewährleistet. Die Chipkarten sind herstellerseitig mit einer FPspezifischen Kennzahl B im schreibgeschützten Teil I des Kennungsstrings versehen. Zusätzlich wird seitens der Frankiermaschine bei Erst-Autorisierung die Kennzahl A schreibgeschützt gespeichert, die sich aus der Seriennummer der Frankiermaschine und einer angehängten beispielsweise 3-stelligen fortlaufenden Zahl 505010 001 zusammensetzt. Unterschieden wird zwischen Masterkarte und Folgekarten, jedoch besteht der Unterschied nur darin, daß die Masterkarte die Erste von der Frankiermaschine autorisierte Karte ist, ansonsten ist die Struktur des Karteninhalts identisch. Die Frankiermaschine Jet Mail® ist in der Lage, selbsttätig Chipkarten zur Benutzung an ihr zu autorisieren. Dieses geschieht aus einem dafür vorgesehenen Kostenstellen-Menü-Unterpunkt heraus, indem nach dem Stecken der Masterkarte und Anwahl der Autorisierungsfunktion eine beliebige Folgekarte einer vorhandenen oder neu definierten Kostenstelle oder Gruppe zugeordnet wird. Dazu wird die entsprechende Folgekarte gesteckt und seitens der Frankiermaschine mit einer Kennzahl A beschrieben. Bei Benutzung der Chipkarte werden beide Kennzahlen (A und B) aus der Chipkarte in die Frankiermaschine geladen und dort nach einer Rechenoperation miteinander verglichen. Beispielsweise bei Gleichheit erfolgt die Auswertung der ausgeblendeten letzten 3 Stellen der Kennzahl A über eine Tabelle u.a. bezüglich, welcher Kostenstellennummer diese Karte zugeordnet ist. Der erste Eintrag in der Tabelle erfolgt für die Masterkarte. Die Frankiermaschine ist ohne eine eingesteckte, die vorgenannte Autorisierungsfunktion aufweisende, Masterkarte gesperrt. In der Frankiermaschine liegt für den ersten Ast gemäß Figur 1b beispielsweise folgende Tabelle gespeichert vor:

| Karten-Nr. | KST -Nr. | Timer -Wert | Funktion Limit | Werbe- Klischee | Wertgrenze | aktueller Rest-Wert |
|---|---|---|---|---|---|---|
| 1234567801 | 1-50 | 20 sec | all/5000 | nein | R3.x = 5000,- | R1.x = 99,- |
| 1234567802 | 1-4 | 10 sec | F1/2000 | 1 | R3.y = 2000,- | R1.y = 255,- |
| 1234567803 | 1 | 2 sec | F3/2000 | 1 | R3.1 = 1000,- | R1.1 = 99,- |
| 1234567804 | 3 | 2 sec | F4/2000 | nein | R3.3 = 1000,- | R1.3 = 10,- |
| 1234567805 | 4 | 2 sec | F5/3500 | 5 | R3.4 = 3000,- | R1.4 = 2005,- |
| 1234567806 | 2 | 1 sec | F6/0000 | nein | R3.2 = 0,- | R1.2 = 0,- |

Der Benutzer hat die Möglichkeit, sich die Chipkarte vom Typ a mit der aktuellen Kostenstellennummer zu beschriften. Änderungen von Zuordnungen zwischen Chipkarten und Kostenstellennummern sind nur über die Masterkarte möglich. Damit sind bestimmte Menüpunkte im Kostenstellenmenü nur mit gesteckter Masterkarte freigegeben. Weiterhin sind auch bestimmte Verknüpfungsbedingungen für die Kostenstellen beispielsweise bezüglich Werbeklischee-Nr., Wertbegrenzung je Zeiteinheit analog änderbar. Auf Ungleichheit bzw. unbekannte, ungültige Karten wird seitens der Frankiermaschine mit einer entsprechenden Fehlermeldung reagiert. Durch die Funktion " Folgekarten-Duplizieren" ist die Frankiermaschine Jet Mail® weiterhin in der Lage, mit Hilfe der Masterkarte selbsttätig Folgekarten zur Benutzung an ihr zu autorisieren. Dazu wird die entsprechende Folgekarte gesteckt und seitens der Frankiermaschine mit der Kennzahl A beschrieben. Für jede Kostenstelle KST kann eine zeitlich begrenzt gültige jedoch (monatlich) erneuerbare Wertgrenze für den Verbrauch an Frankierwerten je Kalendermonat mit Hilfe der Master-karte festgelegt werden. Für jede Kostenstelle KST ist maximal das gesamte in der Frankiermaschine Jet Mail® vorhandene Guthaben verfügbar. Mit Beginn eines neuen Kalendermonats wird die vorbestimmte Wertgrenze übernommen, es gibt keine Überträge. Änderungen von Zuordnungen zwischen Chipkarten-Nr. und KST-Nr., Funktionen mit Limit-Daten sowie den Wertbegrenzungen sind nur mit Hilfe der Masterkarte möglich. Die Bedienoberfläche der Frankiermaschine ist jederzeit komplett vorhanden, jedoch wird bei Anwahl der für die Masterkarte reservierten Punkte, bei nicht gesteckter Masterkarte, dieselbe als Autorisierung verlangt. Die anzeigbare Tabelle zur Verwaltung der Chipkarten-Funktionalität kann z.B. die Felder: Chipkarten-Nr. / KST-Nr. / Timer-Wert / Funktion mit Limit / Werbeklischee-Zuordnung / Wertgrenze 1 aktueller Rest-Wert enthalten. Für sogenannte Gruppenkarten ist es grundsätzlich möglich, daß auch einer Karten-Nummer Gruppen von Kostenstellen x, y zugeordnet werden.

Das mit der Chipkarten-Schreib/Leseeinheit 70 verbundene Steuergerät 90 der Frankiermaschine hat einen nichtflüchtigen Speicher 94, 95 mit erfindungsgemäßen Speicherbereichen A, B, C für eine Zuordnung von gelisteten Anwendungsfunktionen mit Limit-Daten zu einer vorbestimmten Chipkarte und für Parameter. Die Anzeige der Zuordnung kann entsprechend der vorgenannten Tabelle oder in einer ähnlichen Form erfolgen.

Erfindungsgemäß ist vorgesehen, daß das Steuergerät 90 in Abhängigkeit von einer vorbestimmten Eingabe mittels mindestens einer in den Einsteckschlitz 72 der Chipkarten-Schreib/Leseeinheit 70 eingesteckten Chipkarte aus einer Anzahl von Chipkarten 50, 51, 52, 53 eine Einstellung der Frankiermaschine für mindestens ein Funktionsanwendungsprogramm aus einer Anzahl von weiteren Funktionsanwendungsprogrammen gestattet, wobei die erste Chipkarte 50 eine Chipkartennummer und Limit-Daten zugeordnet zu einer Funktion enthält, welche die erste Chipkarte 50 oder die weiteren Chipkarten 51, 52, 53 aufrufen, wobei letztere für eine vorbestimmte Eingabe lediglich eine Chipkartennummer gespeichert enthalten.

Der Mikroprozessor 91 des Steuergerätes 90 ist programmiert,

a) die in der jeweiligen Chipkarte 50, 51, 52, 53 gespeicherte Chipkartennummer zu laden,
b) die in der ersten Chipkarte 50 gespeicherten Limit-Daten zugehörig zu einer Funktion zu laden, wobei die Limit-Daten zu einer Funktion gehören, welche von einer weiteren Chipkarte aufgerufen werden kann,
c) die Zuordnung von Limit-Daten zugehörig zu einer Funktion in den vorgenannten Speicherbereichen A, B zugeordnet zu weiteren Chipkartennummer zu speichern, wobei in den vorgenannten Speicherbereichen A, B die Zuordnung beliebig wählbar vom autorisierten Benutzer zur Chipkartennummer speicherbar ist, für den nachfolgenden Aufruf durch weitere Chipkarten mittels ihrer Nummer,
d) eine Zuordnung der gelisteten Anwendungsfunktionen mit Limit-Daten zur jeweiligen Chipkartennummer in einem der Speicherbereiche A, B des nichtflüchtigen Speichers 94, 95 der Frankiermaschine aufzurufen und die entsprechenden im Programmspeicher 92 gespeicherten Anwendungsprogramme durchzuführen.

Es ist weiterhin vorgesehen, daß der Mikroprozessor 91 des Steuergerätes 90 programmiert ist, die in der ersten Chipkarte 50 gespeicherten Limit-Daten in einen Speicherbereiche C des nichtflüchtigen Speichers 94, 95 der Frankiermaschine als Parameter zu laden.

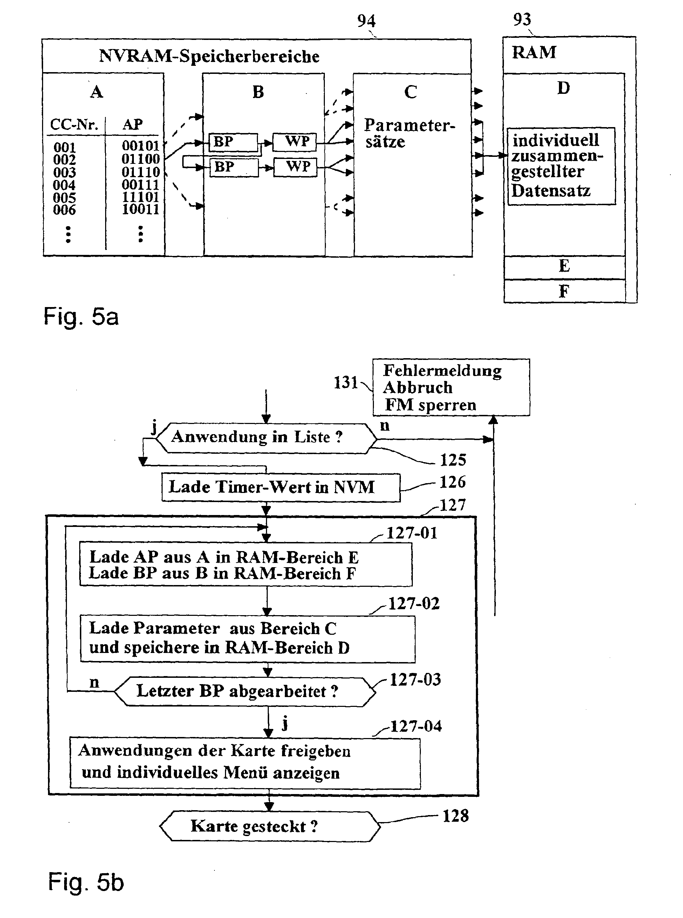

Die Figur 5a zeigt eine Aufteilung der Struktur auf Speicherbereiche A, B und C, wobei im ersten Speicherbereich A ein Verzeichnis gültiger Kartennummern, im zweiten Speicherbereich B Verknüpfungsbedingungen und im dritten Speicherbereich C zugehörige Parametersätze nichtflüchtig gespeichert vorliegen. Die vorgenannte Struktur kann in jedem der vorgenannten Speicherbereiche A und B separat modifiziert werden. Beispielsweise wird der Auflistung im Verzeichnis der gültigen Kartennummern CC-Nr. eine weitere Kartennummer neu hinzugefügt. Jeder Kartennummer ist ein Adreß-Pointer AP zugeordnet, welcher auf eine Adresse im zweiten Speicherbereich B zeigt, unter welcher die kartennummerabhängigen Verknüpfungsbedingungen zusammen mit zugehörigen Bedingungspointern BP und Wertpointern WP gespeichert sind. Die Wertpointer WP zeigen auf eine Adresse für den zugehörigen Parametersatz im dritten Speicherbereich C. Über die Bedingungspointer BP, welche auf eine Adresse für einen weiteren Bedingungspointer mit dem zugehörigen Wertpointer zeigen, wird eine Verknüpfung frei wählbar. Der Wertpointer WP zeigt dann auf eine Adresse mit dem zugehörigen Parametersatz im dritten Speicherbereich C. Die aufgeteilte modifizierbare Struktur ist über die Pointer wieder herstellbar, wobei in Speicherbereichen E, F des Hauptarbeitsspeichers RAM 93 eine Zwischenspeicherung der geladenen Pointer erfolgt, wobei eine entsprechende Dateneingabe in einen Speicherbereich D des Hauptarbeitsspeichers RAM 93 zur Speicherung eines Datensatzes vorgenommen wird, wobei der Mikroprozessor 91 der Frankiermaschine eine entsprechende Funktion bzw. eine gespeicherte Reihenfolge von Funktionen entsprechend dem Anwendungsprogramm und der so eingegebenen Parameter ausführt. Eine der Funktionen kann zur Initialisierung von Folge-Karten ausgeführt werden, um diese modifizieren zu können oder um die Struktur in einer Tabelle mindestens teilweise anzuzeigen.

Es wird nach Figur 4 vorausgesetzt, daß ein Teil III des Kennungsstrings, ausgewertet wird und dann im Schritt 125 festgestellt wird, daß die Funktionenanwendung gelistet ist, indem die Kartennummer im Speicherbereich A aufgefunden wird. Nun wird ein Timer-Wert in einen weiteren - in Fig. 5a nicht dargestellten - Speicherbereich U eines nichtflüchtigen Speichers, vorzugsweise des Uhren/Datumsbausteins 95, geladen. Dann wird der Schritt 127 erreicht.

In der Figur 5b ist ein Detail des Ablaufplans nach Figur 4 dargestellt, um die Steuerung durch den Mikroprozessor 91 beim Aufruf mindestens einer der Funktionen entsprechend der gespeicherten Struktur durch Eingabe einer Chipkartennummer zu verdeutlichen. Bevor für eine Folgekarte die Funktionalität freigegeben wird, werden in einem Subschritt 127-01 derjenige Adreßpointer AP in einen Speicherbereich E des Hauptarbeitsspeichers RAM 93 geladen, welcher im Speicherbereich A der Chipkartennummer zugeordnet ist. Außerdem werden im Subschritt 127-01 Bedingungspointer BP Schritt für Schritt bei jedem Durchlaufen einer Schleife S in einen Speicherbereich F des Hauptarbeitsspeichers RAM 93 geladen. Diese vorgenannten Speicherbereiche E und F des Hauptarbeitsspeichers RAM 93 dienen zur Zwischenspeicherung der Daten der Pointer AP und BP für die nachfolgende Datenverarbeitung. Nach dem Laden und Zwischenspeichern der Daten der Pointer AP und BP wird ein im zweiten Speicherbereich B gespeicherter Wertpointer WP aufgefunden, welcher dem Bedingungspointer BP zugeordnet ist. Zugleich wird den Daten des Bedingungspointers BP ein Verweis auf einen nachfolgenden Bedingungspointer BP entnommen, auf welchen der Mikroprozessor 91 zugreifen soll, um weitere zugehörige Wertpointer WP aufzufinden. Die weitere Datenverarbeitung im Subschritt 127-02 ist vorzugsweise verschachtelt, d.h. zeitoptimal organisiert. So kann ein sogenanntes " pipelineing" durchgeführt werden, wenn die Wertpointer WP auf die Parametersätze im dritten Speicherbereich C zeigen und entsprechende Parametersätze aus dem dritten Speicherbereich C zur Speicherung im RAM-Bereich D des Hauptarbeitsspeichers RAM 93 geladen werden. Im nachfolgenden Subschritt 127-03 wird dabei geprüft, ob bei der vorgenannten Abarbeitung der Routine ein letzter Bedingungspointer BP abgearbeitet worden ist. Ist das nicht der Fall, dann wird zum Subschritt 127-01 zurückverzweigt, um sequentiell die Schleife S weiter solange abzuarbeiten, bis im Subschritt 127-03 das Abarbeiten eines letzten Bedingungspointers BP festgestellt worden ist. Im nachfolgenden Subschritt 127-04 werden die Anwendungen der gesteckten Karte freigegeben, entsprechend des während der Abarbeitung der o.g. Schleife S individuell zusammengestellten Datensatzes im Speicherbereich D. Der Mikroprozessor 91 greift dabei auf im Programmspeicher 92 gespeicherte Funktionenanwendungen zurück und auf die Parameter, welche im o.g. zwischengespeicherten Datensatz vorliegen. Zugleich kann ein dem individuellen Datensatz entsprechendes individuelles Menü in der Anzeigeeinheit 89 dargestellt werden.

Es ist vorgesehen, daß eine im Programmspeicher 92 gespeicherte Funktionenanwendung eine Tastatureingabe vorsieht, damit der Mikroprozessor 91 das Anwendungsprogramm zu Ende abarbeiten kann.

Es ist vorgesehen, daß der Mikroprozessor 91 programmiert ist, auf drei Speicherbereiche A, B, C des nichtflüchtigen Speichers 94, 95 des Steuergerätes 90 zuzugreifen, um eine Zuordnung der gelisteten Anwendungsfunktionen zur jeweiligen Chipkartennummer im nichtflüchtigen Speicher 94, 95 der Frankiermaschine aufzurufen und die entsprechenden Anwendungsprogramme durchzuführen. Die Zuordnung repräsentiert eine vorbestimmte Struktur, wobei die auf die drei Speicherbereiche A, B, C des nichtflüchtigen Speichers 94, 95 aufgeteilte modifizierbare Struktur mittels Pointer wieder herstellbar ist. Die Zuordnung der gelisteten Anwendungsfunktionen zur jeweiligen Chipkarten-nummer in einem der Speicherbereiche A, B des nichtflüchtigen Speichers 94, 95 der Frankiermaschine, welche vom Mikroprozessor 91 aufgerufen wird, um die entsprechenden im Programmspeicher 92 gespeicherten Anwendungsprogramme durchzuführen, ist mit einer eingesteckten Masterkarte beliebig änderbar, weil in den vorgenannten Speicherbereichen A, B die Zuordnung beliebig wählbar vom autorisierten Benutzer nach mindestens einer entsprechenden Eingabe, beispielsweise per Tastatur 88, speicherbar ist.

Es ist weiterhin vorgesehen, daß die im nichtflüchtigen Speicher 94, 95 der Frankiermaschine nichtflüchtig gespeichert vorliegende Struktur, eine durch die Reihenfolge der Auflistung der Chipkartennummern und durch die Zuordnung von gelisteten Anwendungsfunktionen gegebene hierarchische Struktur ist.

Der Mikroprozessors 91 des Steuergerätes 90 ist programmiert, die Chipkartennummer, die in einem dafür vorgesehenen Teil eines in den geschützten Speicherbereichen der Chipkarten 50, 51, 52, 53 gespeicherten Kennungsstrings gespeichert vorliegt, zu laden, eine Funktionseingabe nach dem Stecken der Chipkarte entsprechend durchzuführen, um die Verwaltung von zu buchenden Kostenstellendaten durch Zugriff auf die zugehörige Funktionenanwendung zu vereinfachen. Die am Beispiel des Schrittes 127 erläuterte Programmierbarkeit der Anwendungen, die einer Chipkartennummer zugeordnet sind, gilt für erste Chipkarten (Masterkarten) im Schritt 121 ebenso wie für zweite und weitere Folgekarten. Für Masterkarten 50 kann bei Abarbeitung eines entsprechenden Schrittes 121-04 auf ein Schirmbild für einen Menüpunkt: Erzeugung einer Anwendungskarte (nicht dargestellter Schritt 121-1) verzweigt werden.

Eine Gruppenkarte GC ist eine solche zweite Karte, welche jeweils höher autorisiert ist, als eine weitere Chipkarte EC oder Folgekarte FC (Fig.1b). Diese letzteren Karten EC und FC bilden Gruppenmitglieder auf unterschiedlichen Hierarchieebenen 52 und 53. Die Befugnis-Sicherung innerhalb einer Gruppen-Anwendung, d.h. Anwendungen in einer Hierarchieebene 52 oder 53, kann vorteilhaft auch sehr unterschiedlichen Ansprüchen an die individuelle Sicherheit der Gruppenmitglieder angepaßt werden. Das wird dadurch erreicht, daß für jede eindeutig durch den hierarchisch strukturierten Kennungsstring vom Mikroprozessor identifizierbare Chipkarte EC oder FC ein Limit-Konto in der Frankiermaschine geführt wird. Die hierarchisch nächst höher stehende Gruppenkarte GC lädt davor beim Initialisieren der hierarchisch tiefer stehenden Chipkarte EC oder FC das Limit-Konto in geschützte Speicherbereiche des nichtflüchtigen Speichers 94, 95. Das Limit-Konto ist beispielsweise ein Zeitkonto, welches die folgenden Kenngrößen beinhaltet:

- mehrmalige Benutzung innerhalb eines Zeitbereiches Z1,

- maximal erlaubter Nutzungsabstand beträgt Zeitdauer Z2,
- maximale Nutzungsdauer / session beträgt Zeitdauer Z3,
- maximale Lebensdauer / lifetime beträgt Zeitdauer Z4,
- die Anwendungsverlängerungszeit beträgt Zeitdauer Z5.

Durch derartige Parameter (Zeitkontendaten) können für jeden Chipkartentyp Befugnisse und Limitierungen bis hin zu einem Verfallsdatum erteilt werden, an welchem die Anwendung gesperrt wird. Diejenige Chipkarte, die Befugnisse und Limitierungen erteilt hat, kann allein die Erteilung sperren oder erneuern. Erfindungsgemäß kann durch die eine Befugnis/Limitierung erteilende ranghöhere Chipkarte (Gruppenkarte) die Befugnis für rangniedrigere Chipkarten EC oder FC individuell erneuert bzw. verlängert werden.

Es ist vorgesehen, daß der Mikroprozessor 91 der Frankiermaschine über den Mikroprozessor 75 der Chipkarten-Schreib/Leseeinheit 70 die PIN-Daten an die erste Chipkarte 50 sendet, um das Laden der zu einer Funktion zugehörigen Limit-Daten zu veranlassen, sowie daß mindestens die erste Chipkarte 50 eine intelligente Speicherkarte ist, mit einem Nurlesespeicher ROM für einen allgemeinen Speicherbereich, mit einem nichtflüchtigen Schreib/Lese-Speicher EEPROM, welcher einen ungeschützten CC1 und geschützten Speicherbereich CC2 aufweist, mit einer speziellen Sicherheits- und Schutzlogik realisiert, welche eine PIN-Prüfung durchführt, bevor auf sicherheitsrelevante Daten im geschützten Speicherbereich CC2 zugegriffen wird, wobei im geschützten Speicherbereich CC2 der ersten Chipkarte 50 zusammen mit dem einem Teil der Chipkartennummer sicherheitsrelevante Daten gespeichert sind, welche zeitliche, stückzahl- oder wertgrößenmäßige Grenzdaten darstellen oder Funktionen beinhalten, welche eine Limitierung einer Operation bewirken und wobei die in der ersten Chipkarte 50 gespeicherten Limit-Daten zugehörig zu einer Funktion gespeichert sind.

**Patentansprüche**

1.  Frankiermaschine mit einer Chipkarten-Schreib/Leseeinheit (70), mit einer Steuereinrichtung (1) und mit einer Druckeinrichtung (20), welche von der Steuereinrichtung (1) gesteuert wird, wobei eine angeschlossene Benutzerschnittstelle (88, 89) oder eine in einen Einsteckschlitz (72) der Chipkarten-Schreib/Leseeinheit (70) eingesteckte erste Chipkarte (50) eine Einstellung der Frankiermaschine für mindestens eine Funktionsanwendung gestattet, um die entsprechenden im Programmspeicher (92) gespeicherten Anwendungsprogramme auszuführen, wobei die zugehörige Steuereinrichtung (1) ein mit einem Mikroprozessor (91) mit zugehörigen Speichern (92, 93, 94, 95) ausgestattetes Steuergerät (90) aufweist, **gekennzeichnet dadurch,**

    - **daß** das Steuergerät (90) der Frankiermaschine mit der Chipkarten-Schreib/Leseeinheit (70) verbunden ist und einen nichtflüchtigen Speicher mit Speicherbereichen (A, B) für eine Zuordnung von gelisteten Anwendungsfunktionen mit Limit-Daten zu einer vorbestimmten Chipkarte und mit Speicherbereich (C) für Parameter aufweist,
    - **daß** das Steuergerät (90) in Abhängigkeit von einer vorbestimmten Eingabe mittels mindestens einer in den Einsteckschlitz (72) der Chipkarten-Schreib/Leseeinheit (70) eingesteckten Chipkarte aus einer Anzahl von Chipkarten (50, 51, 52, 53) eine Einstellung der Frankiermaschine für mindestens ein Funktionsanwendungsprogramm aus einer Anzahl von weiteren Funktionsanwendungsprogrammen gestattet, wobei die erste Chipkarte (50) eine Chipkartennummer und Limit-Daten zugeordnet zu einer Funktion enthält, welche die erste Chipkarte (50) oder die weiteren Chipkarten (51, 52, 53) aufrufen, wobei jede Chipkarte für die vorbestimmte Eingabe lediglich je eine Chipkartennummer gespeichert enthält, wobei der Mikroprozessor (91) des Steuergerätes (90) programmiert ist,
    a) die in der jeweiligen Chipkarte (50, 51, 52, 53) gespeicherte Chipkartennummer zu laden,
    b) die in der ersten Chipkarte (50) gespeicherten Limit-Daten zugehörig zu einer Funktion zu laden, wobei die Limit-Daten zu einer Funktion gehören, welche von einer weiteren Chipkarte aufgerufen werden kann,
    c) die Zuordnung von Limit-Daten zugehörig zu einer Funktion in den vorgenannten Speicherbereichen (A, B) zugeordnet zu weiteren Chipkartennummer zu speichern, wobei in den vorgenannten Speicherbereichen (A, B) die Zuordnung zur Chipkartennummer beliebig wählbar vom autorisierten Benutzer zur Chipkartennummer speicherbar ist, um den nachfolgenden Aufruf der Funktion auch durch weitere Chipkarten mittels ihrer Nummer durchzuführen,
    d) eine Zuordnung der gelisteten Anwendungsfunktionen mit Limit-Daten zur jeweiligen Chipkartennummer in einem der Speicherbereiche (A, B) des nichtflüchtigen Speichers (94, 95) der Frankiermaschine aufzurufen und die entsprechenden im Programmspeicher (92) gespeicherten Anwendungsprogramme durchzuführen.

2.  Frankiermaschine, nach Anspruch 1, **gekennzeichnet dadurch, daß** der Mikroprozessor (91) des Steuergerätes

(90) programmiert ist,

- die in der ersten Chipkarte (50) gespeicherten Limit-Daten in einen Speicherbereiche (C) des nichtflüchtigen Speichers (94, 95) der Frankiermaschine als Parameter zu laden,
- auf drei Speicherbereiche (A, B, C) des nichtflüchtigen Speichers (94, 95) des Steuergerätes (90) zuzugreifen, um eine Zuordnung der gelisteten Anwendungsfunktionen zur jeweiligen Chipkartennummer im nichtflüchtigen Speicher (94, 95) der Frankiermaschine aufzurufen und die entsprechenden Anwendungsprogramme durchzuführen, wobei die Zuordnung eine vorbestimmte Struktur repräsentiert, wobei die auf die drei Speicherbereiche (A, B, C) des nichtflüchtigen Speichers (94, 95) aufgeteilte modifizierbare Struktur mittels Pointer wieder herstellbar ist, wobei in einem Speicherbereich (C) der Speicherbereiche (A, B, C) zugehörige Parameterdaten gespeichert sind, wobei der Mikroprozessor (91) programmiert ist, eine entsprechende Dateneingabe in einen Speicherbereich (D) des Hauptarbeitsspeichers RAM (93) vorzunehmen und um eine entsprechende Funktion bzw. eine gespeicherte Reihenfolge von Funktionen entsprechend dem im Programmspeicher 92 gespeicherten Anwendungsprogramm mit den dem Speicherbereich (C) entnehmbaren Parametern auszuführen.

3. Frankiermaschine, nach den Ansprüchen 1 bis 2, **gekennzeichnet dadurch, daß** der Mikroprozessor (91) der Frankiermaschine über den Mikroprozessor (75) der Chipkarten-Schreib/Leseeinheit (70) PIN-Daten an die erste Chipkarte (50) sendet, um das Laden der zu einer Funktion zugehörigen Limit-Daten zu veranlassen, sowie daß mindestens die erste Chipkarte (50) eine intelligente Speicherkarte ist, mit einem Nurlesespeicher ROM für einen allgemeinen Speicherbereich, mit einem nichtflüchtigen Schreib/Lese-Speicher EEPROM, welcher einen ungeschützten (CC1) und geschützten Speicherbereich (CC2) aufweist, mit einer speziellen Sicherheits- und Schutzlogik realisiert, welche eine PIN-Prüfung durchführt, bevor auf sicherheitsrelevante Daten im geschützten Speicherbereich (CC2) zugegriffen wird, wobei im geschützten Speicherbereich (CC2) der ersten Chipkarte (50) zusammen mit dem einem Teil der Chipkartennummer sicherheitsrelevante Daten gespeichert sind, welche zeitliche, stückzahl- oder wertgrößenmäßige Grenzdaten darstellen oder Funktionen beinhalten, welche eine Limitierung einer Operation bewirken und wobei die in der ersten Chipkarte (50) gespeicherten Limit-Daten zugehörig zu einer Funktion gespeichert sind.

4. Frankiermaschine, nach den Ansprüchen 1 bis 2, **gekennzeichnet dadurch, daß** die im nichtflüchtigen Speicher (94, 95) der Frankiermaschine nichtflüchtig gespeichert vorliegende Struktur, eine durch die Reihenfolge der Auflistung der Chipkartennummern und durch die Zuordnung von gelisteten Anwendungsfunktionen mit Limit-Daten gegebene hierarchische Struktur ist.

5. Frankiermaschine, nach einem der vorgenannten Ansprüche 1 bis 4, **gekennzeichnet dadurch, daß** der Mikroprozessor (91) programmiert ist, eine Veränderung in der vorgenannten Struktur derart vorzunehmen, daß durch die eine Befugnis/Limitierung erteilende ranghöhere Chipkarte, die Befugnis für rangniedrigere Chipkarten individuell erneuert bzw. verlängert wird.

**Claims**

1. A franking machine having a chip-card read-write unit (70), a control unit (1) and a printing device (20) that is controlled by a control unit (1), wherein a connected user interface (88, 89) or a first chip card (50) inserted in a plug-in slot (72) of the chip-card read-write unit (70) allows for a setting of the franking machine for at least one functional application in order to execute the respective application programs stored in the program memory (92), wherein the appertaining control unit (1) comprises a control device (90) equipped with a microprocessor (91) with related memory units (92, 93, 94, 95),
**characterized in**

- **that** the control device (90) of the franking machine is connected with the chip-card read-write unit (70) and comprises a non-volatile memory with memory areas (A, B) for an assignment of listed application functions with limit data to a pre-defined chip card as well as a memory area (C) for parameters;
- **that** the control device (90), depending on a pre-defined input by means of a chip card out of a number of chip cards (50, 51, 52, 53) inserted in a plug-in slot (72) of the chip-card read-write unit (70), allows for a setting of the franking machine for at least one functional application program out of a number of further functional application programs, wherein the first chip card (50) contains a chip-card number and limit data assigned to a function that call the first chip card (50) or the further chip cards (51, 52, 53), wherein each chip card contains only one chip-card number for the pre-defined input, wherein the microprocessor (91) of the control device (90) is programmed for

a) loading the chip-card number stored in the respective chip card (50, 51, 52, 53);

b) loading the limit data stored in the first chip card (50) related to a function, wherein the limit data belong to a function that can be called by a further chip card;

c) storing the assignment of limit data belonging to a function in the above-mentioned memory areas (A, B) assigned to further chip-card numbers, wherein the assignment to the chip-card number can be stored in the above-mentioned memory areas (A, B) in a manner freely selectable by the authorized user for the chip-card number in order to execute the subsequent calling of the functions also by further chip cards by means of their number;

d) calling an assignment of the listed application functions with limit data to the respective chip-card number in one of the memory areas (A, B) of the non-volatile memory (94, 95) of the franking machine and executing the respective application programs stored in the program memory (92).

2. A franking machine according to Claim 1, **characterized in that** the microprocessor (91) of the control device (90) is programmed for

- loading the limit data stored in the first chip card (50) into a memory area (C) of the non-volatile memory (94, 95) of the franking machine as parameters;

- accessing three memory areas (A, B, C) of the non-volatile memory (94, 95) of the control device (90) for calling an assignment of the listed application functions to the respective chip-card number in the non-volatile memory (94, 95) of the franking machine and executing the respective application programs, wherein the assignment represents a pre-defined structure, wherein the modifiable structure apportioned among the three memory areas (A, B, C) of the non-volatile memory (94, 95) can be restored by means of a pointer, wherein related parameter data are stored in a memory area (C) of the memory areas (A, B, C), and wherein the microprocessor (91) is programmed for making a respective data entry in a memory area (D) of the main memory RAM (93) and executing a respective function or a stored sequence of functions according to the application program stored in the program memory (92) with the parameters that can be gathered from memory area (C).

3. A franking machine according to Claims 1 to 2, **characterized in that** the microprocessor (91) of the franking machine sends PIN data via the microprocessor (75) of the chip-card read-write unit (70) to the first chip card (50) in order to cause the loading of the limit data belonging to a function, and that at least the first chip card (50) is an intelligent chip card having a read-only memory ROM for a general memory area, a non-volatile read-write memory EEPROM having a non-protected (CC1) and a protected memory area (CC2) realized by means of a special security and protection logic that performs a PIN verification before security-relevant data in the protected memory area (CC2) are accessed, wherein there are stored in the protected memory area (CC2) of the first chip card (50), together with a part of the chip-card number, security-relevant data that represent time-, piece-number- or value-related limit data or contain functions that cause a limitation of an operation, and wherein the limit data stored in the first chip card (50) are stored assigned to a function.

4. A franking machine according to Claims 1 to 2, **characterized in that** the structure stored in a non-volatile manner in the non-volatile memory (94, 95) of the franking machine is a hierarchical structure defined by the listing order of the chip-card numbers and by the assignment of listed application functions with limit data.

5. A franking machine according to one of the above Claims 1 to 4, c h a r-acterized in that the microprocessor (91) is programmed for making a change in the above-mentioned structure in such a manner that the higher-ranking chip card granting an authorization/limitation individually renews or prolongs the authorization for lower-ranking chip cards.

## Revendications

1. Affranchisseuse dotée d'une unité de lecture et d'enregistrement à carte à puce (70), avec un dispositif de commande (1) et avec un dispositif d'impression (20), lequel est commandé par le dispositif de commande (1), sachant qu'une interface d'utilisateur connectée (88, 89) ou une première carte à puce (50) enfichée dans une fente d'enfichage (72) de l'unité de lecture et d'enregistrement à carte à puce (70) permet un réglage de l'affranchisseuse pour au moins une application de fonction, afin d'exécuter les programmes d'application correspondants sauvegardés dans la mémoire du programme (92), l'équipement associé (1) présentant un appareil de commande (90) équipé d'un microprocesseur (91) avec des mémoires associées (92, 93, 94, 95), **caractérisée**

- **en ce que** l'appareil de commande (90) de l'affranchisseuse est relié avec l'unité de lecture et d'enregistrement à carte à puce (70), et présente une mémoire non volatile dotée de zones de mémoire (A, B) pour une affectation à une carte à puce prédéfinie de fonctions d'application répertoriées avec données limites et dotée d'une zone de mémoire (C) pour les paramètres,

- **en ce que** l'appareil de commande (90) permet un réglage de l'affranchisseuse pour au moins un programme d'application de fonctions parmi un nombre d'autres programmes d'application de fonctions, en fonction d'une saisie prédéfinie au moyen d'au moins une carte à puce enfichée dans la fente d'enfichage (72) de l'unité de lecture et d'enregistrement à carte à puce (70) parmi un nombre de cartes à puces (50, 51, 52, 53), sachant que la première carte à puce (50) contient un numéro de carte à puce et des données limites affectées à une fonction, lesquelles appellent la première carte à puce (50) ou les autres cartes à puces (51, 52, 53), chaque carte à puce contenant seulement un numéro par carte à puce pour la saisie prédestinée, et le microprocesseur (91) de l'appareil de commande (90) étant programmé,

a) pour charger les numéros de carte à puce sauvegardés dans la carte à puce respective (50, 51, 52, 53),
b) pour charger les données limites mémorisées dans la première carte à puce (50) en association à une fonction, les données limites appartenant à une fonction pouvant être appelée par une autre carte à puce,
c) pour sauvegarder l'affectation de données limites en association à une fonction dans les zones de mémoire précitées (A, B) et affectée à d'autres cartes à puce, sachant que, dans les zones de mémoire précitées (A, B), l'affectation au numéro de carte à puce est mémorisable de manière sélectionnable indifférente vers le numéro de carte à puce par l'utilisateur autorisé, afin d'effectuer l'appel de la fonction qui suit, également par d'autres cartes à puce au moyen de leur numéro,
d) pour appeler une affectation des fonctions d'applications répertoriées avec données limites vers le numéro de carte à puce respectif dans l'une des zones de mémoire (A, B) de la mémoire non volatile (94, 95) de l'affranchisseuse et pour exécuter les programmes d'application correspondants sauvegardés dans la mémoire du programme (92).

2. Affranchisseuse selon la revendication 1, **caractérisée en ce que** le microprocesseur (91) de l'appareil de commande (90) est programmé

- pour charger comme paramètres les données limites sauvegardées dans la première carte à puce (50) dans une zone de mémoire (C) de la mémoire non volatile (94, 95) de l'affranchisseuse,
- pour accéder à trois zones de mémoire (A, B, C) de la mémoire non volatile (94, 95) de l'appareil de commande (90), afin d'appeler dans la mémoire non volatile (94, 95) de l'affranchisseuse une affectation des fonctions d'application répertoriées relatives au numéro de carte à puce respectif et d'exécuter les programmes d'application correspondants, sachant que l'affectation représente une structure prédéfinie, et que la structure modifiable répartie sur les trois zones de mémoire (A, B, C) de la mémoire non volatile (94, 95) peut être restaurée au moyen d'un pointeur, sachant que des données de paramètres associées sont sauvegardées dans une zone de mémoire (C) des zones de mémoire (A, B, C), le microprocesseur (91) étant programmé afin d'effectuer une saisie de données correspondante dans une zone de mémoire (D) de la mémoire de travail principale RAM (93) et afin d'exécuter une fonction correspondante ou une série de fonctions de manière correspondante au programme d'application sauvegardé dans la mémoire du programme (92) avec les paramètres prélevables de la zone de mémoire (C).

3. Affranchisseuse selon les revendications 1 à 2, **caractérisée en ce que** le microprocesseur (91) de l'affranchisseuse envoie des données PIN à la première carte à puce (50) via le microprocesseur (75) de l'unité de lecture et d'enregistrement à carte à puce (70), afin de lancer le chargement des données limites associées à une fonction, et **en ce qu'**au moins la première carte à puce (50) est une carte à puce intelligente, avec une mémoire fixe ROM destinée à une zone de mémoire générale, avec une mémoire de lecture et d'enregistre-ment non volatile EEPROM, ladite mémoire présentant une zone de mémoire non protégée (CC1) et une zone de mémoire protégée (CC2), réalisée avec une logique spéciale de sécurité et de protec-tion, ladite logique exécutant un contrôle PIN, avant d'accéder aux données pertinentes pour la sécurité dans la zone de mémoire protégée (CC2), sachant que dans la zone de mémoire protégée (CC2) de la première carte à puce (50), les données pertinentes pour la sécurité sont sauvegardées ensemble avec une partie des numéros de cartes à puce, lesdites données contenant les fonctions ou les valeurs limites temporelles, de production ou relatives à l'ordre de valeur et entraînant une limitation de l'exploitation, sachant que les données limites sauvegardées dans la première carte à puce (50) sont sauvegardées en association à une fonction.

4. Affranchisseuse selon les revendications 1 à 2, **caractérisée en ce que** la structure existante sauvegardée de manière non volatile dans la mémoire non volatile (94, 95) de l'affranchisseuse est une structure hiérarchique produite par la série de la répertoriation des numéros de cartes à puce et par l'affectation de fonctions d'application répertorirées avec des données limites.

5. Affranchisseuse selon l'une des revendications précitées 1 à 4, **caractérisée en ce que** le microprocesseur (91) est programmé pour effectuer une modification dans la structure précitée, de sorte que l'autorisation pour les cartes à puce de rang plus faible soit renouvelée ou prolongée à titre individuel par la carte à puce de rang plus élévé fournissant une autorisation/limitation.

**50**

MC

| I/O-interface & Address-counter & decoder | ROM | EEPROM | |
|---|---|---|---|
| | | 32767 | |
| | Security & fuse logic | | CC1 |
| | | 513 | |
| | | 512 | |
| | | | CC2 |
| | | 0 | |

**Fig. 1a**

**53** **52** **51** **50**

FC 2

EC 1

EC 4

FC 5

EC 5

GC 1-4

MC
MASTER
CARD
(Typ a)

FC 8

EC 8

GC 6-8

FC 9

**49**

UC
UPDATE
CARD
(Typ b)

**Fig. 1b**

Fig. 2

Fig. 3

100 — Einschalten    Fehlermeldung — 110

101 — j    Chipkarte gesteckt ?    n

Senden laut Protokoll & auswerten — 102

j    Chipkarte als Typ a lesbar ?    n — 103

104 — Senden laut Protokoll & auswerten

105 — Chipkarte als Typ b lesbar ?    n

106    j    109    107

j    Chipkarte als Typ n lesbar ?    n — 108

131 — Benutzung der FM sperren

Kennungsstring, Teil I (0FH) in den NVM der FM laden & auswerten — 111

112 — Firmen-Kennzahl B speichern    Fehlermeldung — 113

Kennungsstring, Teil II (10H-1FH) in den NVM der FM laden
Kennzahl A maskieren zu A1, bilde A2 = A1 - SRN - C — 114

115 — j    Kennzahl B = A2 ?    n    Sperren des Speicherbereiches & Fehlermeldung — 116

117 — Kennzahl A maskieren    119

Kennungsstring, Teil III (20H-3BH) in
den NVM der FM laden und auswerten

j    Masterkarte ?    n — 118    j    Anwendung in Liste gefunden ?    n

120 — Lade Timer-Wert in NVM    Lade Timer-Wert in NVM — 125

126

121 — Funktionalität freigeben für
Master, incl. Erzeugung von
einer spez.Anwendungskarte    Funktionalität freigeben
für Anwendung, — 127

j    Karte gesteckt ? — 122    124    128    130    Karte gesteckt ?

j    n — 123    Timerende ?    129    Timer starten    n    Timerende ?

Timer starten

Fig. 4

94

93

NVRAM-Speicherbereiche

RAM

| A | | B | C | D |
|---|---|---|---|---|
| CC-Nr. | AP | | Parameter-sätze | individuell zusammen-gestellter Datensatz |
| 001 | 00101 | BP  WP | | |
| 002 | 01100 | | | |
| 003 | 01110 | BP  WP | | |
| 004 | 00111 | | | |
| 005 | 11101 | | | |
| 006 | 10011 | | | |
| ⋮ | ⋮ | | | |

E

F

## Fig. 5a

131 — Fehlermeldung
Abbruch
FM sperren

j ⟨ Anwendung in Liste ? ⟩ n — 125

Lade Timer-Wert in NVM — 126

127

Lade AP aus A in RAM-Bereich E
Lade BP aus B in RAM-Bereich F — 127-01

Lade Parameter aus Bereich C
und speichere in RAM-Bereich D — 127-02

n ⟨ Letzter BP abgearbeitet ? ⟩ — 127-03

j

Anwendungen der Karte freigeben
und individuelles Menü anzeigen — 127-04

⟨ Karte gesteckt ? ⟩ — 128

## Fig. 5b